# FASCICULE DE BREVET EUROPEEN

(11) **EP 2 681 782 B1**
(45) Date de publication et mention de la délivrance du brevet: **20.12.2017**
(21) Numéro de dépôt: 12707099.3
(22) Date de dépôt: 02.03.2012
(51) Int. Cl.: H01M 2/20, H01M 10/42, H01M 10/44, H01M 10/48, H02J 7/00, B60L 11/18

(54) **DISPOSITIF DE STOCKAGE ET GENERATION D'ENERGIE MODULAIRE**
MODULARE VORRICHTUNG ZUR ENERGIESPEICHERUNG UND -ERZEUGUNG
MODULAR DEVICE FOR STORING AND GENERATING ENERGY

(30) Priorité: 02.03.2011 FR 1151688; 02.03.2011 FR 1151689; 08.06.2011 FR 1155018; 01.07.2011 FR 1155933; 01.07.2011 FR 1155934; 13.07.2011 FR 1156384
(43) Date de publication de la demande: 08.01.2014
(73) Titulaire: Commissariat à l'Énergie Atomique et aux Énergies Alternatives, 75015 Paris (FR); Renault S.A.S., 92100 Boulogne-Billancourt (FR)
(72) Inventeur: DESPESSE, Ghislain, 38120 Saint Egreve (FR)
(74) Mandataire: Novaimo
(86) Numéro de dépôt international: PCT/EP2012/053689
(87) Numéro de publication internationale: WO 2012/117113

(56) Documents cités:
- WO-A1-2012/117109
- WO-A2-2012/117110
- JP-A- 2006 006 077
- US-A1- 2008 292 947
- US-A1- 2009 289 598
- US-B1- 6 177 779

## Description

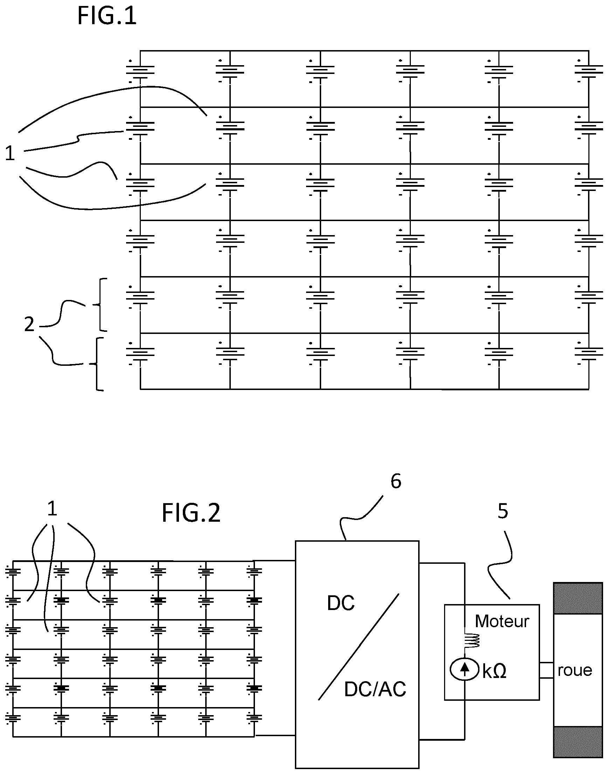

L'invention concerne un dispositif de stockage et/ou de génération d'énergie. Elle concerne particulièrement un pack batterie comprenant plusieurs étages de plusieurs cellules élémentaires. Elle concerne aussi un procédé de modification de l'architecture du dispositif de stockage et/ou de génération d'énergie. Des dispositifs de stockage électrique pertinents à l'invention sont décrits dans les publications JP2006-006077 et US2009/289598. La figure 1 représente un pack batterie selon l'état de la technique, que nous appellerons plus simplement batterie par la suite. Une telle batterie comprend un assemblage de plusieurs cellules, chaque cellule étant elle-même composée d'une ou plusieurs batteries élémentaires, la batterie élémentaire étant formée par une partie active intégrée dans un compartiment avec deux bornes. La batterie représentée sur la figure 1 comprend plus précisément plusieurs étages ou modules 2, disposés en série, et chaque module comprend plusieurs cellules 1 disposées en parallèle.

L'utilisation d'une telle batterie de l'état de la technique pour alimenter un moteur 5 nécessite un dispositif 6 intermédiaire de type convertisseur DC/DC ou AC, disposé entre la batterie et le moteur 5, tel que représenté sur la figure 2. Le dispositif 6 a pour fonction d'ajuster la tension de sortie de la batterie aux besoins du moteur 5, afin de s'adapter ainsi à la vitesse et au couple demandé au moteur. En remarque, le même principe s'applique à toute charge alimentée par la batterie. D'autre part, lors de la recharge de la batterie, un dispositif équivalent doit être utilisé entre le réseau électrique et la batterie pour suivre la tension d'entrée du réseau électrique.

La gestion d'une telle batterie de l'état de la technique comprend en général une observation des grandeurs électriques de sortie pour en déduire un diagnostic de son fonctionnement. Cette approche s'avère insuffisante car elle ne permet pas de déterminer avec précision les zones de la batterie, comme les modules ou certains groupes de cellules, qui sont par exemple défaillants. Il en résulte dans la pratique une mauvaise optimisation du fonctionnement de la batterie et une baisse très rapide de ses performances dès qu'elle présente une partie défaillante, accompagnée souvent d'une aggravation rapide de son état et un vieillissement prématuré.

Pour améliorer cette approche globale, il existe certains procédés de diagnostic qui consistent à observer certaines grandeurs au niveau des modules de la batterie. Cette seconde approche permet plus précisément d'observer localement le comportement particulier de certains modules de la batterie. Toutefois, sa mise en oeuvre est complexe et nécessite l'utilisation de nombreux fils électriques, pour relier un dispositif central de diagnostic à chaque module, ce qui peut induire de forts risques électriques car les fils sont susceptibles de chauffer, ou de se dénuder par frottement puis générer des courts-circuits, par exemple entre deux étages relativement éloignés et de différence de potentiel élevée. D'autre part, cette solution ne permet pas une intervention facile et sécurisée sur un module défaillant.

En effet, une intervention sur une telle batterie complexe se fait généralement par une coupure totale de la batterie, qui devient alors indisponible durant toute l'intervention, ce qui est coûteux et problématique. Par exemple, si la source d'énergie sert à alimenter un bâtiment, toute intervention risque de couper toutes les fonctions principales comme l'alimentation d'ascenseurs, de réfrigérateur, d'éclairage, etc. De plus, si une partie défaillante est retirée, la batterie risque de ne pas fonctionner du tout avant le remplacement de la partie manquante. Cet état de la technique manque naturellement de souplesse et pose de nombreux problèmes pratiques.

Ainsi, il existe un besoin d'une solution améliorée de batterie, et plus généralement de dispositif de génération d'énergie, permettant de résoudre au moins une partie des inconvénients des solutions existantes. A cet effet, l'invention repose sur un dispositif de stockage et/ou de génération électrique selon la revendication 1, ce dispositif comprenant plusieurs boîtiers de génération électrique disposés en série, caractérisé en ce qu'il comprend un bâti avec des emplacements pour loger les boîtiers de manière amovible, un emplacement comprenant des contacts électriques pour la liaison électrique d'un boîtier avec les bornes du dispositif de stockage et/ou de génération électrique, par l'intermédiaire d'un bus de puissance, l'emplacement étant associé à un interrupteur de bâti, de sorte à pouvoir conserver une génération électrique en l'absence d'un certain boîtier dans un certain emplacement par l'intermédiaire d'au moins un autre boîtier disposé dans un autre emplacement du bâti.

L'invention porte aussi sur un procédé de gestion d'un dispositif de stockage et/ou de génération électrique selon la revendication 1, caractérisé en ce qu'il comprend les étapes suivantes :
- détection de la présence d'un boîtier au sein d'un emplacement sur un bâti ;
- actionnement d'un interrupteur de bâti sur un bus de puissance pour fermer une connexion de by-pass sur le chemin de puissance dès le retrait d'un boîtier de l'emplacement et/ou pour ouvrir une connexion de by-pass sur le chemin de puissance dès l'insertion d'un boîtier dans l'emplacement.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement la structure d'une batterie selon un état de la technique.
La figure 2 représente schématiquement le circuit électrique d'un moteur utilisant une telle batterie de l'état de la technique pour son alimentation.
La figure 3 illustre un mode de réalisation d'un bâti intégrant une batterie selon un mode de réalisation de l'invention.
La figure 4 illustre le bâti précédent intégré au sein d'un véhicule automobile selon un mode de réalisation de l'invention.
La figure 5 illustre schématiquement le principe de réalisation de l'invention.
Les figures 6a à 6c représentent respectivement trois configurations différentes d'une batterie lors du retrait d'un boîtier selon un mode de réalisation de l'invention.
La figure 7 représente un dispositif de limitation de tension pour un mode de réalisation de l'invention.
Les figures 8a à 8c représentent respectivement trois configurations différentes d'une batterie lors du retrait d'un boîtier selon un mode de réalisation de l'invention.
Les figures 9a à 9d représentent des configurations différentes d'une batterie selon un mode de réalisation de l'invention.
La figure 10 représente schématiquement un module de la batterie selon un mode de réalisation de l'invention.
La figure 11 illustre plus précisément le schéma électrique choisi pour mettre en oeuvre le module illustré sur la figure 10.
La figure 12 représente schématiquement un module de la batterie selon un autre mode de réalisation de l'invention.
La figure 13 illustre un mode de réalisation d'une batterie selon un mode de réalisation de l'invention.
La figure 14 illustre un mode de réalisation d'une batterie selon un mode de réalisation de l'invention.
La figure 15 illustre une batterie comprenant plusieurs boîtiers connectés en parallèle selon un mode de réalisation de l'invention.

Dans les figures suivantes, les mêmes références seront utilisées pour des éléments identiques ou similaires dans chaque mode de réalisation de l'invention, pour une raison de simplification de la description.

La batterie selon l'invention réunit une multitude de cellules, comme cela a été présenté précédemment, afin de pouvoir délivrer une tension de sortie importante. Selon le concept de l'invention, la structure de cette batterie est de type modulaire, se décompose en différentes sous-parties regroupant chacune plusieurs cellules. La batterie se présente ainsi sous la forme de différents boîtiers indépendants, mécaniquement fixés et connectés électriquement de manière amovible au sein d'un bâti 100, aussi appelé rack. Dans leur position au sein du bâti, les boîtiers sont connectés les uns avec les autres par un bus de puissance, et peuvent transmettre une tension à des bornes de sortie du bâti. Chaque boîtier peut comprendre une sous-partie quelconque de la batterie, qui peut aller par exemple d'un seul module à plusieurs modules, en reprenant une architecture similaire à celle présentée en référence avec la figure 1. Naturellement, toute autre architecture de batterie est possible et tout autre découpage en sous-parties, chacune de ces sous-parties étant ensuite intégrées dans un boîtier comprenant des éléments de connexion propres.

Les modes de réalisation qui vont être décrits plus en détail par la suite s'intéressent à une solution qui permet d'ajouter et/ou retirer facilement un boîtier de la batterie, tout en permettant à cette batterie de pouvoir continuer à fonctionner avec les boîtiers restants. Une première approche permet un retrait et/ou une insertion d'un boîtier dans un bâti, accompagné(s) d'une coupure momentanée du courant de la batterie, éventuellement durant un temps très faible et négligeable pour une charge connectée à la batterie. Une seconde approche permet la réalisation d'une telle opération sans aucune coupure de courant, ce qui assure une continuité du fonctionnement de la batterie. Ces solutions permettent ainsi la gestion conviviale et optimale d'une batterie puisqu'elles rendent possible sa modularité, permettant d'adapter facilement son architecture, notamment le nombre de boîtiers et les caractéristiques électriques des boîtiers, tout en facilitant la maintenance des boîtiers ou leur échange en cas de forte défaillance.

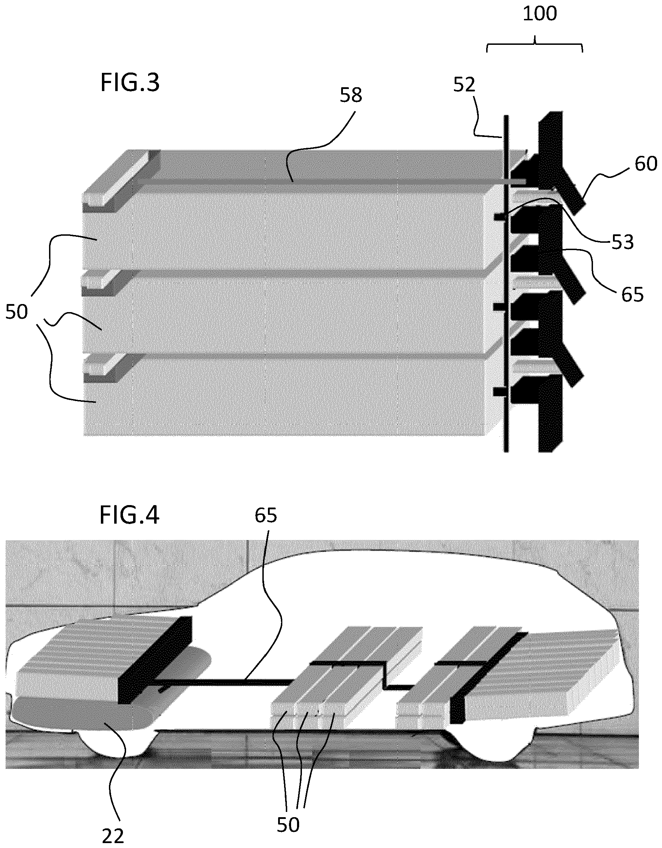

La figure 3 illustre ainsi une telle approche dans laquelle les différents boîtiers 50 de la batterie sont disposés dans une architecture modulaire de type rack, fixés sur un bâti 100. Chaque boîtier 50 est fixé sous forme de tiroir indépendant et maintenu par un dispositif de verrouillage/déverrouillage 58. Dans leur position de fixation dans leurs emplacements sur le bâti 100, les boîtiers 50 sont reliés à un bus de communication 52 par l'intermédiaire d'un connecteur 53, de manière hautement isolée galvaniquement, et à un bus de puissance 65 par un connecteur de puissance, non représenté, qui leur permet une liaison série avec les boîtiers adjacents. Le dispositif de verrouillage/déverrouillage 58 est associé à un système d'interrupteur permettant de couper automatiquement les connexions au bus de puissance lorsqu'il est actionné pour le retrait d'un boîtier 50. La connexion est alors remplacée par un court-circuit, via par exemple un interrupteur de bâti 60, mécanique ou électrique, agencé sur le bus de puissance 65, lorsque le boîtier est retiré pour ne pas couper la connexion entre les boîtiers restants.

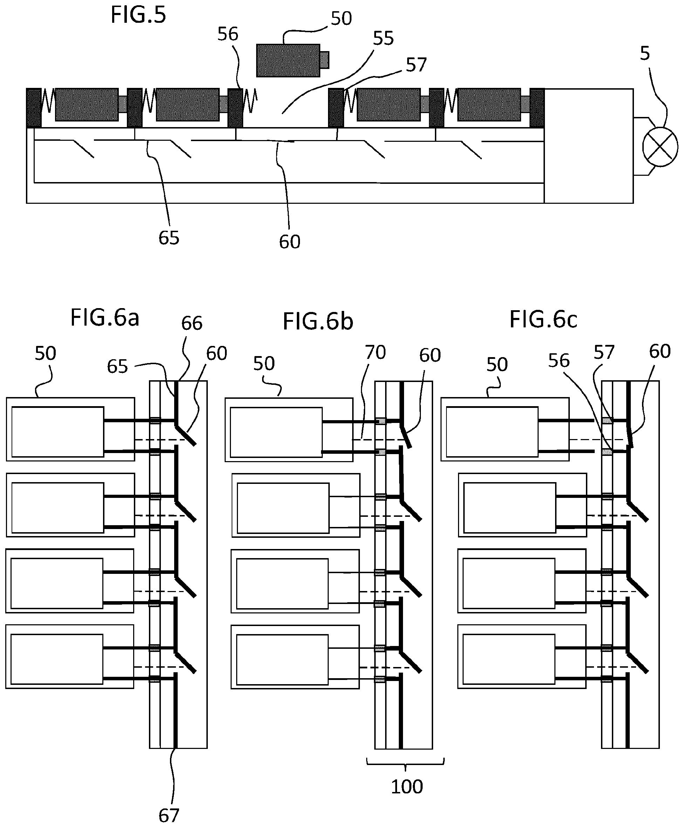

La figure 5 représente ainsi sous une autre forme la batterie selon un mode de réalisation de l'invention, dans laquelle un boîtier 50 a été retiré de son emplacement 55 et de sa connexion électrique avec les deux contacts électriques 56, 57 de cet emplacement. En remarque, les boîtiers fixés dans leurs emplacements sur le bâti 100 sont reliés électriquement au bâti par ces deux bornes. Lorsqu'un boîtier 50 est retiré, un interrupteur de bâti 60, associé à l'emplacement considéré qui est vide du fait du retrait du boîtier, se trouve alors en position fermée, permettant de former une liaison électrique de dérivation ou by-pass entre les deux contacts 56, 57, afin de maintenir la liaison électrique entre tous les boîtiers 50 restant fixés au bâti, par l'intermédiaire du bus de puissance 65. Au contraire, les interrupteurs 60 associés à des emplacements occupés par des boîtiers 50 sont ouverts. La batterie continue alors de délivrer une certaine tension à une charge 5 par l'intermédiaire d'un éventuel convertisseur 6, même lorsqu'un ou plusieurs boîtiers sont retirés. En remarque, dans cette réalisation, aucun bus de communication n'est utilisé entre les différents boîtiers.

Un tel assemblage physique, tel que représenté par les figures 3 et 5, peut ainsi être intégré dans un véhicule automobile, comme illustré en figure 4, dans laquelle les différents boîtiers 50 sont répartis sur toute la longueur dans la partie inférieure du véhicule automobile, à titre d'exemple, liés entre eux par une liaison incluant un bus de puissance 65 et un bus de communication, cet ensemble étant lié à un calculateur central 22.

Selon un mode de réalisation de l'invention, les phases de retrait ou d'insertion d'un boîtier 50 sur le bâti 100 de la batterie s'accompagnent d'un changement très rapide de la configuration de la batterie pour n'obtenir une coupure électrique que de très courte durée, inférieure à 10 ms, pour permettre la réalisation de telles phases sans impact significatif sur l'utilisation normale de la batterie.

Ainsi, les figures 6a à 6c illustrent le changement de configuration d'une batterie comprenant plusieurs boîtiers 50 fixés à un bâti 100. Sur la figure 6a, tous ces boîtiers sont normalement fixés au bâti 100 et les interrupteurs 60 associés et agencés au niveau d'un bus de puissance 65 sont tous en configuration ouverte. Chaque boîtier 50 a ses deux bornes reliées au bus de puissance 65 sur lequel sont disposés les interrupteurs de bâti 60, de sorte à disposer tous les boîtiers 50 en série entre les deux bornes 66, 67 de la batterie, agencées au niveau du bâti 100. De plus, chaque boîtier 50 présente une liaison mécanique 70 avec son interrupteur associé. La figure 6b représente une phase intermédiaire de retrait du boîtier 50 le plus haut sur la figure. Ce retrait entraîne l'interrupteur 60 associé vers sa position fermée par l'intermédiaire du lien mécanique 70 de sorte que cette position fermée soit atteinte dès que le boîtier 50 quitte les contacts 56, 57 permettant sa liaison électrique avec le bâti. La figure 6c représente ainsi la position finale de la batterie après le retrait total de ce boîtier.

Le retrait de plusieurs autres boîtiers peut être effectué de la même manière. Ensuite, le repositionnement d'un boîtier 50 au sein du bâti 100 permet d'atteindre la configuration de la figure 6a en passant par les étapes inverses.

Les connecteurs électriques, leviers, et interrupteurs, mentionnés précédemment, peuvent prendre toutes formes. Par exemple, l'interrupteur 60 du bâti peut prendre toute autre forme et être remplacé par des composants électroniques, comme des relais, transistors (MOS, JFET, IGBT, Bipolaire, thyristor ...en technologie Si, GaN, SiC).

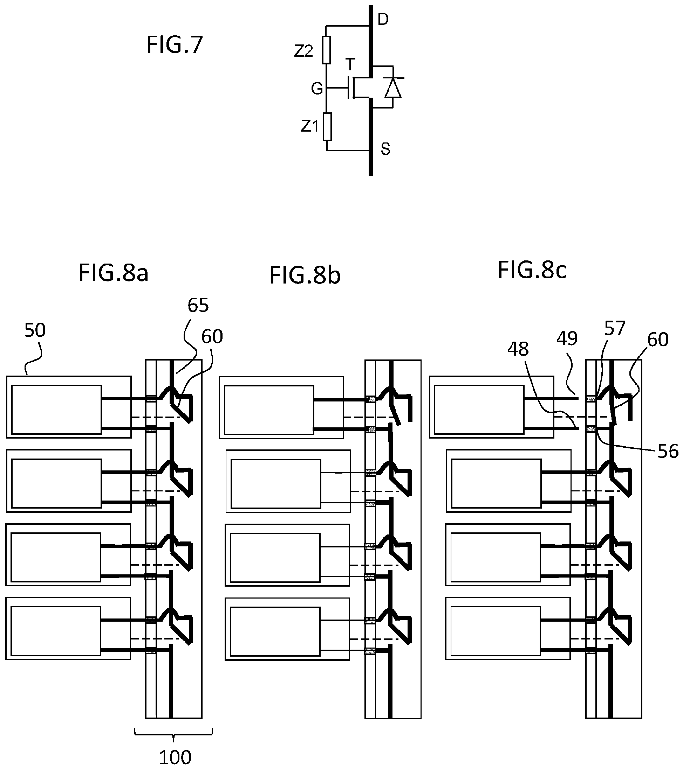

Lors des changements de position de l'interrupteur 60, sa tension est susceptible d'atteindre temporairement des valeurs très élevées qui pourraient le détériorer. Pour éviter un tel phénomène, un dispositif de limitation de tension, représenté à la figure 7, peut être utilisé. Dans cette implémentation, l'interrupteur est un transistor T, et le dispositif de limitation de tension comprend une diode et un pont diviseur Z1, Z2 de type résistif et/ou capacitif. La diode empêche l'inversion de la tension aux bornes du transistor. Le pont diviseur limite la montée en tension à ses bornes en le rendant plus ou moins passant. En effet, lorsque la tension en sortie du pont diviseur Z1, Z2 se rapproche de la tension de seuil du transistor, ce dernier commence à se fermer, ce qui naturellement tend à limiter la montée en tension V_{DS} à ses bornes.

Les figures 8a à 8c illustrent le changement de configuration d'une batterie comprenant plusieurs modules 50 fixés à un bâti 100, comme dans le cas des figures 6a à 6c, mais dans le cadre d'une variante de réalisation dans laquelle les interrupteurs 60 du bâti 100 sont des interrupteurs bistables de type va-et-vient. Ces interrupteurs remplissent la double fonction de connexion de boîtier et d'interrupteur de bâti 60.

La figure 8a représente une configuration dans laquelle tous les boîtiers 50 sont fixés au bâti 100. Les interrupteurs 60 occupent une première position qui permet de relier les deux bornes 56, 57 du bus de puissance 65 du bâti 100 à respectivement les deux bornes 48, 49 d'un boîtier 50, assurant ainsi la connexion en série de tous les boîtiers sur le chemin de puissance 60 du bâti.

La figure 8b représente une situation intermédiaire dans laquelle le boîtier du haut commence à être retiré. L'interrupteur bistable se trouve dans une position intermédiaire entre ses deux positions.

Sur la figure 8c, le boîtier 50 est totalement retiré, et l'interrupteur 60 occupe sa seconde position qui permet de fermer la liaison électrique sur le bus de puissance 65 pour ne pas ouvrir le circuit de la batterie, qui continue ainsi de délivrer une tension avec les boîtiers restants.

Grâce à la propriété de l'interrupteur 60 utilisé dans cette réalisation, on est certain de ne pas avoir en même temps la fermeture de cet interrupteur sur le chemin de puissance 65 et la mise en série du boîtier associé, ce qui écarte tout risque de court-circuit.

Un tel interrupteur 60 de type va-et-vient présente aussi l'avantage de permettre d'atteindre un basculement interne très rapide, beaucoup plus rapide que la vitesse d'actionnement mécanique. Cette solution convient parfaitement à un retrait et/ou un positionnement d'un boîtier à chaud, c'est-à-dire en phase d'utilisation de la batterie.

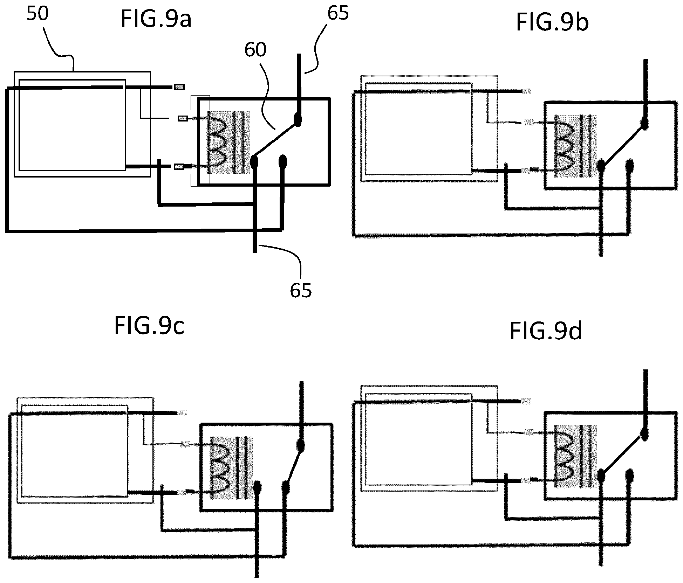

Les figures 9a à 9d représentent une version avec des interrupteurs bistables commandables électriquement (par exemple de type relais) d'une telle solution.

La figure 9a représente la situation d'approche d'un boîtier 50 vers un bâti 100, le boîtier étant non connecté au bâti. Sur la figure 9b, le boîtier vient en contact électrique avec les connecteurs du bâti, le relais formant l'interrupteur 60 n'étant pas encore activé. Dans ces deux situations, le boîtier 50 reste shunté et non relié au bus de puissance 65. La figure 9c représente la fin de la phase d'insertion du boîtier. Le relais change de position et permet la connexion effective du boîtier 50 sur le bâti. Enfin, la figure 9d illustre le début du retrait du boîtier 50. Le relais bascule rapidement pour isoler le boîtier avant que le contact électrique du boîtier soit rompu, pour éviter ainsi tout arc électrique dans le connecteur, tout en assurant la continuité du courant sur le bus de puissance.

Le concept décrit précédemment peut être optimisé en choisissant une structure de batterie particulière, qui permet aux différents boîtiers 50 de participer aux phases d'insertion et/ou de retrait.

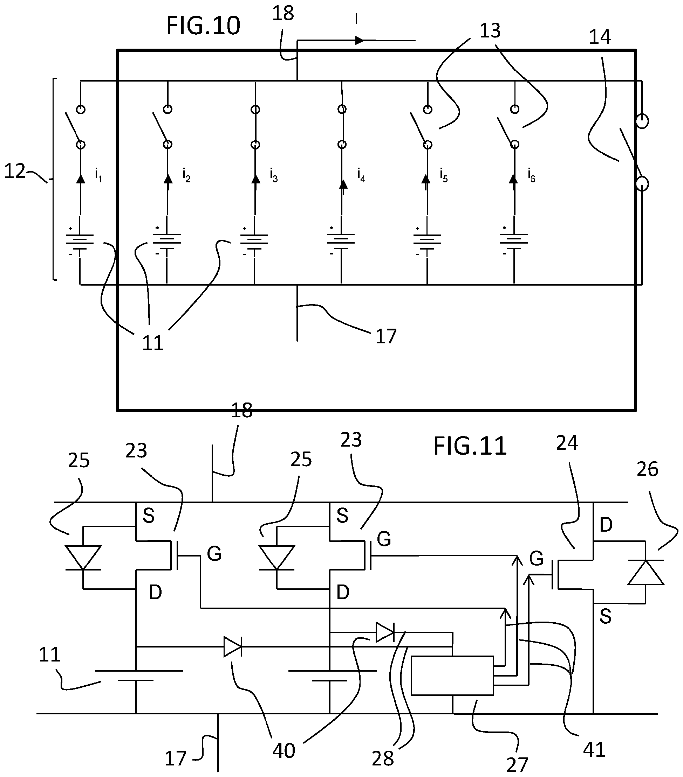

A cet effet, la figure 10 représente schématiquement un mode de réalisation de l'invention dans lequel une batterie comprend une multitude de cellules 11 organisées en plusieurs modules 12 comme dans l'état de la technique représenté sur la figure 1, et intègre notamment une architecture telle que détaillée dans les demandes de brevets FR2972305 et FR2972308. Toutefois, chaque cellule 11 est associée à un interrupteur 13 qui lui est propre, disposé en série sur une même branche qui s'étend de la borne inférieure 17 du module et la borne supérieure 18, respectivement destinées à une liaison série du module avec un module inférieur et supérieur, qui permet de déconnecter la cellule du reste du module et de la batterie par l'ouverture de son interrupteur 13 : pour cela, nous l'appellerons « interrupteur de cellule 13 » par la suite. De plus chaque module 12 comprend aussi un interrupteur 14 en parallèle des cellules 11 du module 12, permettant ainsi de court-circuiter l'ensemble du module : pour cela, nous l'appellerons « interrupteur de module 14 » par la suite. L'utilisation d'une telle batterie pour alimenter une charge, comme un moteur, permet de s'affranchir des convertisseurs intermédiaires utilisés dans l'état de la technique, comme cela apparaît sur la figure 4, et permet une modulation avantageuse de la batterie pour sa coopération avec un bâti 100. Avantageusement, une batterie sera alors partagée en différents boîtiers comprenant chacun un ou plusieurs modules disposés en série.

La figure 10 illustre ainsi en détail un module 12 de la batterie selon un mode de réalisation de l'invention décrit ci-dessus. Selon cet exemple, ce module comprend six cellules 11 disposées en parallèle. Naturellement, il pourrait en variante comprendre tout autre nombre de cellules. Plus précisément, le module comprend d'abord six branches parallèles disposées entre ses bornes supérieure 18 et inférieure 17, sur lesquelles sont disposées une cellule 11 et un interrupteur de cellule 13, apte à déconnecter ou non la cellule d'une des deux bornes 17, 18. Il comprend une septième branche sur laquelle est disposé un interrupteur de module 14, en parallèle avec les cellules, apte à shunter les cellules. Sur l'exemple illustré, seules les troisième et quatrième cellules sont utilisées car leurs interrupteurs de cellule 13 respectifs sont fermés, alors que tous les autres interrupteurs de cellule sont ouverts. D'autre part, l'interrupteur de module 14 est ouvert pour mettre le module 12 dans sa configuration normale de stockage ou de restitution d'énergie.

La figure 11 illustre plus précisément le schéma électrique choisi pour mettre en oeuvre le schéma explicité ci-dessus, en référence avec la figure 10. Sur cette figure 11, seuls deux interrupteurs de cellule 13 sont représentés pour simplifier la figure. Les différents interrupteurs 13, 14 sont réalisés à l'aide de transistors de puissance 23, 24, de préférence des transistors de type NMOS, qui apportent un gain en conductivité dans leur état passant par rapport à des transistors PMOS qui pourraient en variante être utilisés. En variante, il est aussi possible d'utiliser d'autres types de transistors tel que des bipolaires, FET, JFET, IGBT, etc. On peut aussi placer plusieurs transistors en parallèle pour mieux assurer le passage du courant. Naturellement, il existe autant de transistors de cellule 23 que d'interrupteurs de cellule 13, et un transistor de module 24 pour former l'interrupteur de module 14. Tous ces transistors 23, 24 sont associés à des diodes 25, 26 montées en parallèle, qui sont intégrées dans les transistors si ce sont des transistors de puissance discrets NMOS ou en variante sont des diodes distinctes, pour représenter leur caractéristique de laisser passer le courant en sens inverse. Enfin, un circuit de commande 27, généralement appelé par la dénomination anglo-saxonne « driver », est alimenté électriquement par des liaisons 28 lui permettant de récupérer une différence de tension correspondant sensiblement à la tension de la cellule la plus chargée du module, légèrement diminuée par une chute de tension (par exemple proche de 0,6 V) au niveau des diodes 40 disposées sur les liaisons 28. Ce circuit de commande a pour fonction de générer des signaux de commande 41 vers les différents transistors 23, 24 pour les actionner remplissant ainsi une fonction de commande des interrupteurs. De manière similaire et non représenté pour une question de clarté des figures, tous les composants électroniques du module peuvent être alimentés selon la même solution, comme un calculateur permettant d'estimer l'état des interrupteurs, un éventuel système de communication, etc.

Le fonctionnement de ce dispositif va maintenant être expliqué. Lors de son utilisation dans un circuit similaire à celui de la figure 5, en configuration habituelle de fonctionnement, au moins un des transistors de cellule 23 est fermé, alors que le transistor de module 24 est ouvert, ce qui permet aux cellules 11 associées aux transistors de cellule 23 fermés de délivrer une tension et un courant qui traverse les transistors fermés et qui va finalement contribuer à l'alimentation de la charge 5. Un courant circule de la borne inférieure 17 vers la borne supérieure 18. En revanche, si tous les transistors de cellule 23 sont ouverts et que le transistor de module 24 est fermé, le courant va passer par ce transistor de module et les cellules du module sont isolées, ne participent pas à la génération de courant d'alimentation. Dans le cas où tous les transistors 23, 24 sont ouverts, le courant consommé, c'est-à-dire de décharge de la batterie, va passer par la diode inverse 26 associée au transistor de module 24, et la tension aux bornes 17, 18 du module reste égale à environ -0,6 V (la tension de la borne supérieure 18 est inférieure d'environ 0,6 V à celle de la borne inférieure 17 : cette chute de tension provient de la diode inverse 26 associée au transistor de module 26). Enfin, il est évité de positionner un transistor de cellule 23 fermé alors que le transistor de module 24 est aussi fermé, pour ne pas mettre la cellule 11 en court circuit, pour des raisons de sécurité. Ainsi, pour tout passage des transistors de cellule 23 fermés vers une situation où le transistor de module 24 est fermé, ou inversement, il sera de préférence procédé à une étape intermédiaire d'ouverture de tous les transistors, pendant une courte période de quelques nanosecondes par exemple.

D'autre part, le dispositif représenté sur cette figure 11 est aussi adapté à un fonctionnement en mode de recharge des cellules, dans lequel le courant est inversé et circule depuis la borne supérieure 18 vers la borne inférieure 17. En situation normale, les transistors de cellule 23 sont fermés, alors que le transistor de module 24 est ouvert, ce qui permet à un courant de traverser les transistors de cellule 23 pour recharger les cellules 11. En revanche, si tous les transistors de cellule 23 sont ouverts et que le transistor de module 24 est fermé, le courant va passer par ce transistor de module et l'ensemble du module est isolé, n'est pas rechargé. Dans le cas où tous les transistors 23, 24 sont ouverts, un courant va passer par les diodes inverses 25 associées aux transistors de cellule 23, et la tension aux bornes 17, 18 du module reste égale à celle des cellules (par exemple 3,3 V) augmentée de la tension aux bornes des diodes 25 (par exemple + 0,6 V). Enfin, il est de même évité dans cette phase de recharge de positionner un transistor de cellule 23 fermé alors que le transistor de module 24 est aussi fermé, pour ne pas mettre la cellule 11 en court-circuit, pour des raisons de sécurité.

Il est intéressant de noter que la tension d'un module reste faible, même quand tous les transistors sont ouverts, ce qui permet d'utiliser des transistors supportant des tensions relativement faibles et peu coûteux, et dont la résistance à l'état passant est très faible, ce qui induit peu de pertes. Cela sera notamment vérifié si les cellules 11 présentent une tension inférieure à 40 V.

Selon un aspect avantageux de l'invention, des interrupteurs sont donc intégrés au niveau de tout ou partie des cellules d'une batterie, pour permettre, par l'intermédiaire d'un circuit de commande de ces interrupteurs, d'utiliser ou non certaines cellules en fonction des besoins et de mesures effectuées représentatives de l'état d'une ou plusieurs cellules. Les cellules sont de plus organisées sous la forme de regroupements particuliers, pour atteindre une architecture permettant facilement de disposer des cellules en série ou en parallèle, pour s'adapter au besoin d'une charge et/ou à l'état des cellules, et obtenir une optimisation de la batterie, l'augmentation de ses performances et de sa durée de vie. La batterie intègre de plus avantageusement des capteurs de mesure au niveau de tout ou partie des cellules ou modules.

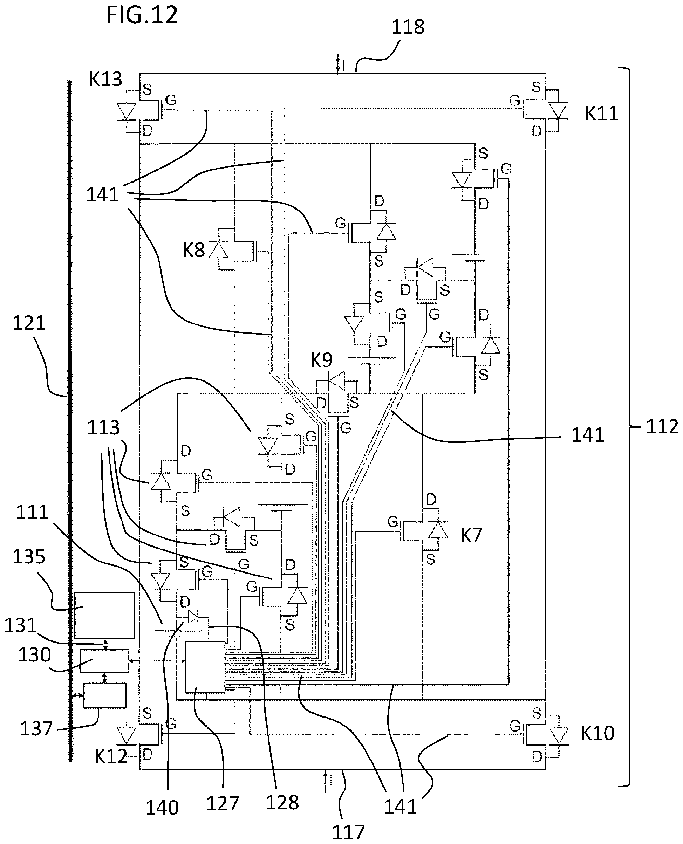

La figure 12 représente en détail un module selon une autre réalisation avec une approche similaire, dans le cas d'une batterie d'architecture telle que détaillée dans la demande de brevet FR2977986. Dans ce mode de réalisation, chaque module 112 comprend une borne inférieure 117, reliée à un module voisin inférieur, et une borne supérieure 118 pour une liaison série avec le module voisin supérieur. Un pont en H placé entre les bornes 117 et 118 peut être utilisé pour permuter les connexions de ces bornes 117 et 118 vis-à-vis des modules voisins supérieur et inférieur. Chaque module est composé de briques disposées en parallèle entre ses deux bornes 117, 118. Dans ce mode de réalisation, chaque brique comprend deux branches verticales s'étendant entre ses deux bornes inférieure 117 et supérieure 118, sur lesquelles sont respectivement disposés dans l'ordre suivant de bas en haut : une cellule 111 et deux interrupteurs 113 sur la première branche verticale, et deux interrupteurs 113 et une cellule 111 sur la seconde branche verticale. De plus, une branche transversale comprenant un autre interrupteur 113 relie les deux bornes intermédiaires disposées sur chacune des deux branches verticales entre la cellule 111 et l'interrupteur 113 le plus bas mentionné.

Cette architecture permet à une brique d'occuper les différentes configurations suivantes en fonction de la position des interrupteurs :
- les deux cellules 111 de la brique peuvent être disposées en parallèle : cette configuration permet par exemple d'obtenir une restitution de courant maximal en sortie de la brique ;
- les deux cellules 111 de la brique peuvent être disposées en série : cette configuration permet par exemple d'obtenir la tension maximale en sortie de la brique, et la restitution d'une tension maximale d'un module 112 ;
- une seule des deux cellules de la brique peut être active, participe par exemple à la restitution d'énergie de la batterie ;
- enfin, si tous les interrupteurs sont ouverts, les deux cellules de la brique peuvent être déconnectées du reste de la batterie.

Il apparaît ainsi que cette architecture permet à chaque brique et donc chaque module de fournir une tension simple ou double, un courant nul, simple ou double, simplement en choisissant la position des interrupteurs 113 disposés au niveau des cellules d'une brique. Pour cette raison, nous appellerons simplement « interrupteur de cellule 113 » par la suite ces trois interrupteurs. Dans un cas particulier de réalisation, une tension nulle sur le module est possible si les interrupteurs sont bidirectionnels en tension, c'est-à-dire sans diode inverse : la tension nulle ne peut alors être imposée par le module que via la fermeture de l'interrupteur optionnel.

Sur le mode de réalisation choisi, chaque module 112 peut comprendre aussi un interrupteur en parallèle des briques du module 112, permettant ainsi de court-circuiter l'ensemble du module, c'est-à-dire un « interrupteur de module» comme explicité précédemment en référence avec la figure 10. Cet interrupteur est utile lorsque toutes les briques d'un module sont en configuration déconnectée, afin de conserver une liaison électrique entre les différents modules de la batterie.

Le module représenté par la figure 12 comprend de plus un ou plusieurs capteurs de mesure, non représentés, pour mesurer par exemple la température, la tension et/ou le courant, pour chaque cellule 111 du module 112, puis communiquer leurs mesures à une unité de mesure 135. Les mesures effectuées par ce ou ces capteurs sont transmises à un circuit de traitement 130 local, via un multiplexeur par exemple, par des voies de communications non représentées. Le circuit de traitement 130 reçoit ainsi ces données par une voie communication 131 effectuant une numérisation, de type « ADC input » ; ou en variante, ces signaux arrivent déjà numérisés, cette numérisation étant réalisée au niveau du multiplexeur. Selon une réalisation possible, le circuit de traitement 130 peut être un microcontrôleur disposant d'un nombre d'entrée/sortie suffisant pour interroger l'ensemble des capteurs. Tous les transistors utilisés pour former les interrupteurs de cellule 113, pour former un dispositif de mise en série/parallèle des briques du module (K7, K8, K9), et pour former un dispositif d'inversion de la tension de sortie du module (fonction de type pont en H) (K10 à K13), sont pilotés par un circuit de commande 127 de puissance qui leur transmet des signaux de commande 141, sous les ordres du circuit de traitement 130. Enfin, ce dernier est relié à un calculateur central par un bus de communication 121 et par l'intermédiaire d'une interface 137 formant une isolation galvanique.

Tous ces composants associés à un seul module sont alimentés localement, c'est-à-dire par la tension d'au moins une des cellules 111 du module 112, voire d'un module voisin. A titre d'exemple, le circuit de commande 127, généralement appelé par la dénomination anglo-saxonne « driver », est alimenté électriquement par une liaison 128 lui permettant de récupérer une différence de tension correspondant sensiblement à la tension de la cellule la plus proche, légèrement diminuée par une chute de tension (par exemple proche de 0,6 V) au niveau d'une diode 140 disposée sur la liaison 128.

En variante non représentée, le circuit de commande 127 pourrait être alimenté électriquement par des liaisons 128 avec plusieurs cellules du module, lui permettant de récupérer une différence de tension correspondant sensiblement à la tension de la cellule la plus chargée, légèrement diminuée par une chute de tension (par exemple proche de 0,6 V) au niveau de la diode 140 disposée sur les liaisons 128. Ensuite, selon la réalisation représentée, chaque circuit de traitement 130 est relié par un bus de communication 121 à un calculateur central, qui reçoit les mesures effectuées localement au sein d'un module de la batterie et met en oeuvre un procédé de gestion de la batterie, comprenant notamment la transmission de commandes d'ouverture et/ou fermeture des interrupteurs de la batterie, par l'intermédiaire du circuit de commande 127. Ce transfert de données par le bus de communication 121 peut nécessiter un éventuel multiplexage et numérisation des données, ainsi qu'une isolation galvanique 137 (par transformateur ou optocoupleur). Le circuit de commande 127, placé par exemple sur une carte électronique comprenant tous les composants électroniques du module, constitue un élément intermédiaire entre le calculateur central et les interrupteurs, permettant l'adaptation de la tension transmise aux transistors formant la fonction d'interrupteurs pour la mise en oeuvre des commandes du calculateur. Ces circuits de commande 127 peuvent de plus intégrer des fonctions de sécurité pour éviter par exemple de fermer un interrupteur de module alors que les interrupteurs de cellule sont fermés, pour éviter tout court-circuit.

Selon une réalisation avantageuse explicitée précédemment, tous les composants de puissance associés à un module de la batterie sont alimentés directement par la tension disponible au niveau du module correspondant, voire d'un module voisin, notamment le circuit de commande 27, 127 des transistors, décrits précédemment. Un tel circuit de commande, alimenté par son module associé, est alors isolé électriquement des autres modules et/ou des potentiels électriques extérieurs au module. Une telle réalisation présente l'avantage de supprimer le risque de piloter un certain transistor avec un potentiel très différent de celui de l'étage, qui pourrait conduire à sa destruction ou à sa mise en court-circuit. De plus, cette solution apporte l'avantage supplémentaire de permettre la réduction des connexions entre les composants du circuit de commande et la source d'alimentation, puisqu'il est possible de les regrouper à une courte distance les uns des autres et de la source de tension, notamment en positionnant les transistors au plus près des cellules à connecter. Enfin, l'utilisation de connexions très courtes réduit aussi fortement tout risque de court-circuit, par exemple entre deux modules.

De même, un dispositif de communication alimenté par l'étage de la batterie peut permettre de communiquer avec les autres étages et/ou avec un système central via un lien hautement isolé pour éviter les risques électriques (court circuits entre étages, détérioration du système central placé à un potentiel très différents de quelques kV par rapport à celui d'un étage de la batterie, risque électrique pour le réparateur). Contrairement à un transformateur d'impulsion qui permettrait de commander les transistors de puissance au travers d'une isolation galvanique, l'utilisation d'un dispositif de communication alimenté par le module permet d'interpréter les signaux reçus (décodage de l'adresse, de l'information), de coder les signaux à transmettre et de mutualiser les lignes de communication alors que le transformateur d'impulsion permet juste de mettre « on » ou « off » le transistor de puissance avec une ligne de connexion individualisée à chaque transistor. Le dispositif de communication peut être par exemple une interface I2C présente dans de nombreux microcontrôleurs, que l'on relit à un bus de communication mutualisé à chaque étage via une isolation galvanique.

Ainsi, le dispositif stockage et/ou de génération électrique peut comprendre un boîtier comprenant au moins un circuit de commande interne participant à l'actionnement d'au moins un interrupteur interne, ce circuit de commande étant alimenté par au moins une cellule du boîtier.

Un boîtier peut aussi comprendre plusieurs modules disposés en série, chaque module comprenant une borne inférieure apte à une connexion avec un module inférieur et une borne supérieure apte à une connexion avec un module supérieur, chaque module comprenant au moins une branche entre sa borne inférieure et sa borne supérieure comprenant une cellule, au moins un interrupteur et un circuit de commande dudit interrupteur qui est alimenté électriquement directement par au moins une cellule du module donné ou d'un module voisin.

Un boîtier peut comprendre de plus au moins un interrupteur au niveau d'un module parmi :
- un interrupteur de cellule pour connecter ou déconnecter une cellule particulière de la batterie ;
- un interrupteur parallèle, pour by-passer ou non une cellule particulière de la batterie ;
- un interrupteur de module, pour by-passer ou non un module de la batterie ;
- un interrupteur pour by-passer ou non plusieurs modules simultanément de la batterie ;
- un interrupteur pour inverser ou non la tension en sortie de la batterie ;
- un interrupteur d'inversion série/parallèle pour disposer en série ou en parallèle certaines sous-parties de la batterie ;
- un interrupteur supplémentaire pour disposer deux cellules en série ou en parallèle.

Un boîtier peut comprendre au moins un capteur de mesure d'une grandeur caractéristique de l'état d'une cellule associé à un interrupteur, et en ce qu'elle comprend au niveau de chaque module donné ou d'un module voisin de celui-ci, un circuit de traitement local des mesures effectuées par ledit au moins un capteur de mesure, le circuit de traitement pilotant l'interrupteur par l'intermédiaire d'un circuit de commande en fonction d'au moins une grandeur caractéristique de l'état de la cellule.

Dans l'exemple décrit ci-dessus, le procédé de gestion de la batterie est mis en oeuvre par la coopération d'un circuit de traitement 130 local, disposé au niveau de chaque module, et d'un calculateur central. L'ensemble des fonctions de gestion de la batterie pourra donc être mis en oeuvre par cette combinaison. Plusieurs modes de réalisation peuvent ainsi être imaginés, en reportant certaines fonctions de gestion du niveau local au niveau central ou inversement.

Selon une variante de réalisation, le procédé de gestion de la batterie est mis en oeuvre localement uniquement, au niveau de chaque module et/ou boîtier, voire cellule. Cela présente l'avantage de permettre un pilotage plus réactif des différents interrupteurs, d'éviter l'obligation de prévoir une isolation galvanique vers un calculateur central et un codage complexe des informations à transférer.

L'intérêt de l'utilisation de boîtiers reposant sur une architecture de batterie telle que représentée à titre d'exemple par les figures 10 à 12 est de permettre à chaque boîtier 50 de pouvoir adopter une tension de sortie nulle par l'actionnement d'un ou plusieurs interrupteurs internes. Naturellement, le boîtier peut prendre d'autres architectures que celles représentées et comprendre d'autres interrupteurs. Avantageusement, il comprend par exemple au moins un interrupteur, disposé en série avec les modules, pour permettre de couper toute liaison électrique entre une borne de sortie du boîtier et les cellules actives du boîtier.

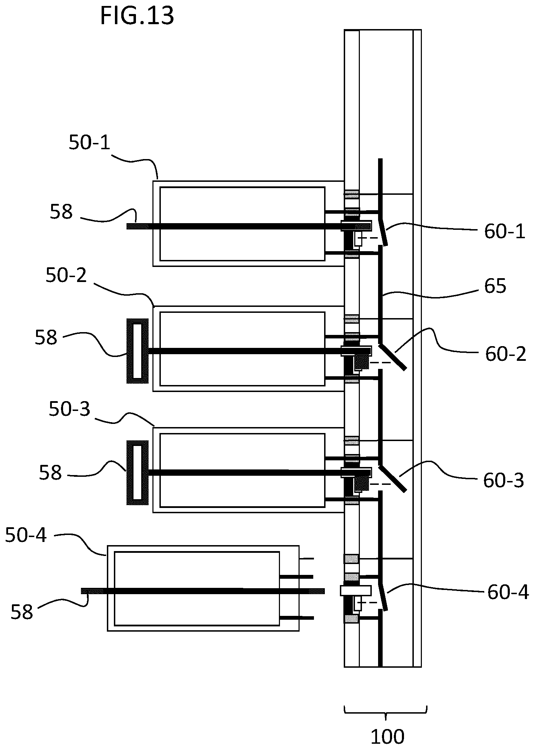

La figure 13 illustre ainsi une batterie comprenant quatre boîtiers 50-1 à 50-4 reposant sur une des structures décrites ci-dessus et associés à un bâti 100. Naturellement, la batterie pourrait comprendre tout autre nombre de boîtiers. Chaque emplacement du bâti 100 est équipé d'un dispositif permettant d'accueillir un dispositif de verrouillage/déverrouillage 58.

Le premier boîtier 50-1 est enfiché dans le bâti 100 mais non verrouillé. Son interrupteur de bâti 60-1 associé est fermé et le boîtier 50-1 est configuré de sorte d'offrir une tension de sortie nulle. En effet, pour une sécurité optimale, on n'autorise une tension non nulle en sortie d'un boîtier 50 que lorsqu'il est parfaitement verrouillé au sein du bâti 100. Ce premier boîtier 50-1 reste donc ici non connecté au reste de la batterie et non fonctionnel.

Les second et troisième boîtiers 50-2, 50-3 sont verrouillés et leurs interrupteurs de bâti associés 60-2, 60-3 ouverts. Ils se trouvent en configuration normale de fonctionnement.

Le quatrième boîtier 50-4 est retiré du bâti. Sa tension de sortie est nulle et l'interrupteur de bâti 60-4 associé est fermé.

Le bus de communication agencé au sein du bâti 100, relié à une intelligence centrale et/ou permettant simplement aux différents modules de communiquer entre eux, permet de transmettre des commandes pour configurer chaque boîtier, notamment pour qu'ils adoptent ou non une configuration de tension de sortie nulle, selon leur positionnement au sein du bâti 100.

Ainsi, le procédé de gestion de la batterie met en oeuvre automatiquement les étapes suivantes lors du retrait d'un module :
- détection du déverrouillage d'un boîtier ou d'un retrait d'un boîtier ;
- configuration de ce boîtier de sorte de présenter une tension de sortie nulle, fermeture de l'interrupteur de bâti associé pour by-passer le boîtier, et poursuite du fonctionnement de la batterie avec les boîtiers restants.

L'insertion d'un module se fait avec les étapes inverses.

Le boîtier dispose ainsi lui-même d'un interrupteur lui permettant d'isoler électriquement ses cellules de ses bornes de sortie. Lors de l'insertion du boîtier dans le bâti, cet interrupteur reste ouvert. Lorsqu'une insertion suffisante du module est détectée, par exemple indirectement par la position de la poignée du dispositif de verrouillage suffisamment verrouillée (via une détection mécanique, électrique, ou autre), l'interrupteur de bâti est ouvert et peu de temps après, l'interrupteur du boîtier est fermé pour le configurer en tension de sortie nulle. Cette fermeture de l'interrupteur peut être enclenchée via un lien de communication entre le bâti et le boîtier, qui informe que l'interrupteur de bâti est bien ouvert, ou simplement via la détection d'une insertion du boîtier ou du verrouillage suffisant de la poignée du dispositif de verrouillage.

Le verrouillage/déverrouillage des boîtiers, optionnel, peut se faire mécaniquement, par l'actionnement d'un levier, d'un bouton, etc. En variante, ce verrouillage/déverrouillage peut être supprimé, remplacé par une simple détection du bon positionnement d'un boîtier dans le bâti, de son insertion complète. L'utilisation d'un dispositif de verrouillage/déverrouillage présente toutefois l'avantage d'offrir une sécurité supplémentaire pour le maintien des boîtiers, même en cas de vibration lors de l'utilisation de la batterie dans un véhicule automobile.

Le dispositif peut comprendre un dispositif d'information de l'état, verrouillé ou non, sécurisé ou non, d'un certain boîtier, à partir par exemple d'une simple LED.

Dans ces dernières réalisations, un début de verrouillage ou déverrouillage par un actionnement d'un levier ou d'une poignée du dispositif de verrouillage/déverrouillage est détecté et une information est transmise à un système de gestion globale de la batterie, comme un calculateur central. En variante, ce calculateur central est remplacé par un ou plusieurs calculateurs internes, disposés dans un ou plusieurs boîtiers. En cas de déverrouillage d'un boîtier, le calculateur l'écarte aussitôt du fonctionnement global de la batterie et lui impose une tension nulle à ses bornes, ce qui assure la sécurité des manipulations futures et permet son stockage sécurisé. La connexion avec le bus de puissance est ensuite automatiquement coupée, par un interrupteur de bâti, de manière mécanique ou électrique. Les opérations précédentes sont effectuées de manière réversible en cas d'introduction d'un boîtier dans le bâti.

Cette construction présente l'avantage d'une gestion physique simplifiée de la batterie. Chaque sous-ensemble compris dans chaque boîtier est géré de manière indépendante ou semi-indépendante grâce à l'architecture décrite dans les modes de réalisation présentés précédemment. Il est ainsi possible de connaître précisément l'état de charge, l'état de santé comme le vieillissement, une éventuelle détérioration, la capacité en courant et tension de chaque boîtier, et de pouvoir intervenir sur un boîtier donné en cas de défaillance, pour changer un module voire une cellule, ou de pouvoir l'échanger si nécessaire, sans pénaliser l'ensemble de la batterie.

Dans les réalisations précédentes, la synchronisation entre des opérations d'insertion et de retrait d'un boîtier de la batterie et l'actionnement d'un interrupteur de bâti pour gérer au mieux la continuité du fonctionnement électrique de la batterie tout en évitant les courts-circuits est illustrée précédemment. De manière similaire, la connexion et déconnexion d'un boîtier avec un bus de communication peut être gérée selon le même principe, par l'intermédiaire d'interrupteurs de bus de communication.

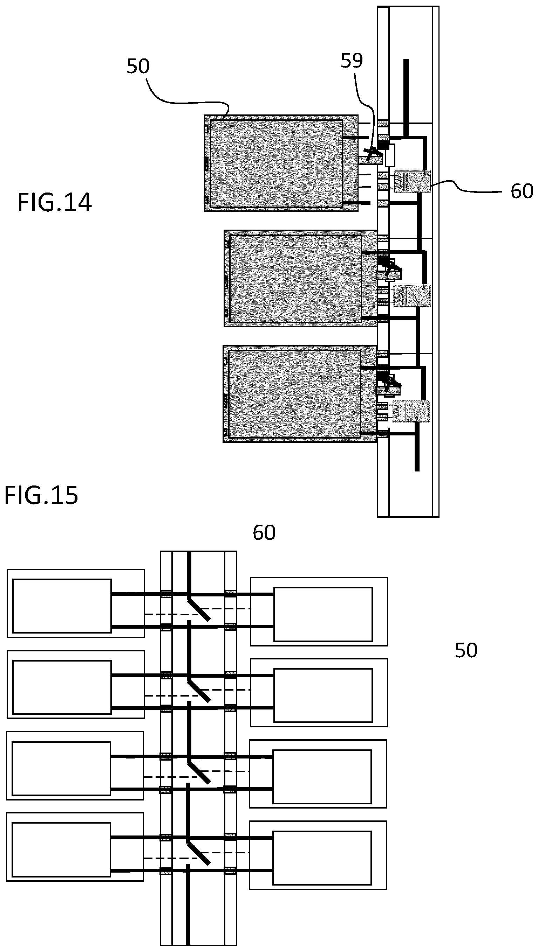

La figure 14 illustre une variante de réalisation de la figure 13, dans laquelle un relais électromécanique est utilisé pour remplir la fonction d'interrupteur 60 de bâti. Dans cette réalisation, la commande d'un tel interrupteur provient d'un boîtier lui-même, qui détecte son bon positionnement ou non au sein du bâti, pour envoyer ou non une commande d'ouverture du relais.

Dans cette réalisation, le verrouillage d'un boîtier est mécanique, mis en oeuvre par l'intermédiaire d'une languette ressort 59 qui bloque le module dans son emplacement lorsqu'il est complètement enfoncé dans son logement au sein du bâti. Le déverrouillage est par exemple réalisé par l'intermédiaire d'un actionneur électromécanique piloté par le boîtier, uniquement après son passage en configuration de tension de sortie nulle.

Comme cela a été vu précédemment, les interrupteurs de bâti 60 peuvent être commandés par un ou plusieurs boîtiers ou par le bâti lui-même, des ordres pouvant transités par l'intermédiaire d'un bus de communication. Selon encore une autre variante, les interrupteurs de bâti peuvent être normalement fermés, ce qui permet de conserver cette position sans ressource, sans alimentation électrique, lorsqu'un boîtier n'est pas connecté à la batterie. Lorsqu'il est repositionné, on dispose alors de la source d'énergie du boîtier, qui peut être exploitée, pour l'ouverture de l'interrupteur.

La figure 15 illustre une variante de réalisation dans laquelle la batterie comprend de plus plusieurs boîtiers disposés en parallèle. Plus exactement, la batterie comprend plusieurs étages disposés en série, chaque étage comprenant deux boîtiers connectés en parallèle. Naturellement, une telle batterie peut comprendre tout autre nombre d'étages et tout autre nombre de boîtiers par étage. Dans une telle configuration, les boîtiers disposés en parallèle sur un même étage partagent un même interrupteur de bâti 60. Cet interrupteur reste ouvert tant qu'au moins un des boîtiers de l'étage est inséré dans son logement et connecté au bus de puissance. Il est automatiquement fermé dès que le dernier boîtier est retiré. En variante, plusieurs interrupteurs de bâti 60 peuvent être utilisés, dès lors que leurs commandes sont liées entre elles.

Dans une telle configuration, la batterie peut mettre en oeuvre une gestion automatique de l'équilibrage des charges entre les boîtiers disposés en parallèle. En effet, un problème technique se pose pour l'insertion d'un boîtier en parallèle d'un boîtier déjà présent, qui peut être dans un état de charge différent. Si aucun équilibrage n'est mis en oeuvre, le boîtier le plus chargé se décharge dans le moins chargé, ce qui est néfaste.

A partir d'une configuration similaire à celles représentées par les figures 10 à 12, il apparaît que les boîtiers peuvent prendre différentes configurations en ouvrant ou fermant un ou plusieurs interrupteurs, leur permettant de prendre une tension nulle ou maximale, voire une multitude de valeurs de tension et courant intermédiaires.

Ainsi, tout ou partie des étapes suivantes peuvent être mises en oeuvre pour l'équilibrage des boîtiers entre eux :
- au moins un des deux boîtiers considérés peut être déconnecté jusqu'à ce que la tension de l'autre boîtier en parallèle soit proche de la sienne ;
- au moins un des deux boîtiers considérés peut alterner des connexions et déconnexions de la batterie, par l'actionnement d'un ou plusieurs interrupteur(s) interne(s), selon un rapport cyclique tel que le courant moyen d'échange ne dépasse pas une certaine valeur ;
- au moins un des deux boîtiers considérés peut disposer d'un interrupteur équipé d'un dispositif de limitation de courant, et adopter une configuration pour que ce courant d'équilibrage soit supportable, notamment par l'interrupteur série qui dissipe la puissance associée à la différence potentielle.

En remarque, le même principe s'applique en phase d'utilisation de la batterie, pour fournir un courant de restitution vers une charge, comme en phase de recharge, pour recevoir un courant de recharge.

Les différentes étapes proposées ci-dessus peuvent naturellement être combinées. Elles sont mises en oeuvre jusqu'à obtenir un équilibrage suffisant qui permet de laisser les boîtiers en parallèle de manière continue.

Le procédé d'équilibrage précédent peut comprendre une étape préalable de mesure d'un courant et/ou d'une tension aux bornes d'un boîtier, la différence de telles mesures entre deux boîtiers en parallèle permettant de définir une stratégie d'équilibrage et d'affiner les étapes présentées précédemment.

Comme la batterie peut être connectée à une charge capacitive, on peut prévoir que le boitier que l'on insère ou retire du bâti passe par une étape de connexion/déconnexion progressive via l'application d'un rapport cyclique de connexion/déconnection augmentant ou diminuant progressivement afin que la charge capacitive en sortie de la batterie puisse se charger ou se décharger progressivement lors de l'insertion ou du retrait du boitier.

Dans toutes les réalisations précédentes, il est utile de pouvoir détecter avec précision la présence ou l'absence d'un boîtier dans un emplacement du bâti. Pour cela, le bâti comprend un dispositif de détection de boîtier, qui peut mettre en oeuvre une étape de détection qui peut comprendre les étapes suivantes :
- Mesure de la tension entre les bornes 56, 57 du bâti. Si cette mesure est éloignée de la tension attendue et prédéfinie, il est considéré qu'un boîtier est absent. Par ailleurs, si un courant prend rapidement une valeur très élevée, il s'agit du début d'un court-circuit qui induit automatiquement la reconfiguration du bâti, qui considère qu'il s'agit d'une phase d'insertion ou de retrait d'un boîtier ;
- Détection mécanique du retrait d'un boîtier, par actionnement d'un interrupteur mécanique ou par coupure d'un contact électrique qui est détecté, ce qui transmet alors l'information de l'absence d'un boîtier ;
- Un élément d'actionnement d'un dispositif de verrouillage, comme un levier, est actionné, en vue de retirer un boîtier, ce qui est interprété comme l'absence d'un boîtier, dès la fin de course de cet élément d'actionnement par exemple ;
- Un appui mécanique du boîtier sur un détecteur peut permettre de connaître la position d'un boîtier, et de détecter les premiers instants d'insertion et de retrait ;

Le dispositif de détection de boîtier peut être intégré dans le bâti, et/ou dans un boîtier lui-même. Lorsque ce dispositif est au moins partiellement dans un boîtier, il est lié par un moyen de communication avec le bâti pour lui transmettre une information de détection.

De manière plus précise, le dispositif de détection de batterie est apte à établir une détection en temps réel, aux instants de retrait et/ou d'insertion d'un boîtier, pour permettre d'actionner de manière séquentielle les différents interrupteurs pour éviter tout court-circuit.

Enfin, dès qu'une détection d'insertion ou de retrait d'un boîtier est réalisée, le procédé de gestion de la batterie comprend une étape d'actionnement de l'interrupteur de bâti 60 pour éviter tout court-circuit et assurer le fonctionnement de la batterie.

La gestion exposée précédemment de la modularité de la batterie par son architecture sous forme d'association de boîtiers indépendants reliés par un bâti, peut être avantageusement combinée à un fonctionnement intelligent de la batterie, selon le procédé de gestion exposé ci-dessous, principalement à l'aide d'architectures de la batterie reprenant les principes des figures 10 à 12.

Ainsi, un procédé de gestion d'une batterie peut comprendre les étapes essentielles suivantes :
- mesure d'au moins une grandeur au niveau d'une cellule de la batterie, représentative de l'état de la cellule ;
- transmission de la grandeur mesurée à au moins un calculateur ;
- détermination de la position d'un interrupteur de cellule et/ou de module en prenant en compte la grandeur mesurée ;
- transmission d'une commande d'ouverture ou fermeture d'un interrupteur de cellule et/ou de module en fonction de la détermination précédente.

Le procédé de gestion de batterie permet ainsi de déterminer à chaque instant la position de plusieurs interrupteurs de cellules et/ou modules, de façon à équilibrer chacun des modules de la batterie et d'aiguiller le courant au sein de chaque module pour équilibrer chacune des cellules des modules. Le procédé pourra notamment comprendre une étape intermédiaire consistant à diagnostiquer une défaillance et/ou un état à risque d'une cellule, en reconnaissant les cellules défectueuses, en surchauffe, etc., à partir de la grandeur mesurée au niveau d'une cellule, afin de déconnecter ou écarter du fonctionnement global de la batterie les cellules concernées, en ouvrant par exemple leur interrupteur de cellule, ou en fermant l'interrupteur de module concerné.

Ainsi, en revenant à l'exemple illustré sur la figure 10, il apparaît que les cellules 1, 2, 5, et 6 ont été écartées. Dans une batterie comprenant un nombre important de cellules et de modules, il est facile d'en écarter un nombre significatif, par exemple 10 % du nombre total de cellules, sans pénaliser l'utilisation de la batterie car le courant demandé est généralement inférieur au courant maximal disponible, utilisé uniquement dans une situation de crête de consommation. D'ailleurs, en cas de pic de consommation, il sera toujours possible de faire appel momentanément aux cellules écartées pour répondre au besoin plus important. Comme ces cellules resteront la plupart du temps inutilisées, elles ne mettront pas en danger la santé globale de la batterie.

Le procédé de gestion de batterie comprend donc une étape de diagnostic d'une cellule incluant une étape d'estimation de l'état d'une cellule, qui peut comprendre à titre d'exemple non limitatif une ou plusieurs mesures de courant, de tension, de température, de spectrométrie d'impédance ou autres au niveau d'au moins une cellule, tout ou partie des cellules de la batterie. Pour cela, la grandeur mesurée peut être comparée à des seuils prédéfinis. Le pilotage de chaque transistor de cellule dépend alors de cet état estimé de la cellule, et permet par exemple de déconnecter une cellule si elle fait apparaitre un courant ou une température anormale ou si elle fournie un courant inverse aux autres cellules, comme dans une situation de cellules voisines qui se déchargent au travers d'une cellule défaillante.

L'étape de diagnostic d'une cellule comprend notamment une étape d'estimation de la charge de la cellule et une estimation de son état de santé. De même, le pilotage de chaque transistor de cellule dépend de ces estimations. Il peut notamment être établi une comparaison de la charge estimée de la cellule avec un seuil de décharge et/ou un seuil de charge.

L'étape de diagnostic d'une cellule comprend par exemple une mesure d'impédance électrique complexe d'une cellule. Pour cela, la mesure du courant et de la tension au niveau de la cellule est effectuée lors d'un instant de passage de courant dans une cellule, par exemple lors d'une commande particulière de l'interrupteur série associé à la cellule, comme son ouverture ou sa fermeture. La réponse à un bruit blanc, à un échelon ou à une impulsion permettent la mesure d'impédance complexe, de manière connue, ce qui permet d'en déduire des informations sur l'état de charge ou de santé de la cellule.

D'autre part, le procédé de gestion de batterie peut mettre en oeuvre une modification cyclique de l'utilisation des cellules, de sorte que tout ou partie des cellules de la batterie passent d'un état de fonctionnement normal à un état déconnecté et réciproquement, selon un rapport cyclique déterminé qui peut être fixe ou variable. Ce rapport cyclique permet de fixer la proportion du temps d'utilisation de chaque cellule de la batterie et de faire en sorte par exemple que la proportion du temps d'utilisation des cellules défectueuses ou en surchauffe soit plus faible que celle des cellules sans surchauffe. Un tel cycle peut être utilisé pour tout ou partie des cellules, même pour des cellules saines, en fonction du besoin global en courant et tension. Les cycles de fonctionnement des différentes cellules peuvent être décalés dans le temps pour obtenir à chaque instant un nombre sensiblement équivalent de cellules actives par exemple, en garantissant à chaque instant un nombre suffisant de cellules actives pour satisfaire le courant demandé.

Ainsi, le procédé de gestion de batterie met en oeuvre les étapes suivantes :
- équilibrage des modules et/ou cellules entre eux, en utilisant en priorité les modules et/ou cellules les plus chargés lorsque la batterie est connectée à une charge et les modules et/ou cellules les moins chargés lors de la recharge de la batterie ;
- équilibrage des modules et/ou cellules en modifiant le taux moyen d'utilisation des modules et/ou cellules, mais sans utiliser les mêmes modules et/ou cellules en permanence, de sorte que la charge des modules et/ou cellules s'équilibre. En effet, si par exemple un module est très chargé par rapport aux autres modules et qu'il est utilisé en permanence afin que sa charge atteigne au plus vite la charge des autres modules, il risque de surchauffer. L'équilibrage est de préférence réalisé en permanence durant la charge ou l'utilisation de la batterie, et il n'est ainsi pas nécessaire de solliciter fortement un module pour arriver rapidement à l'équilibre. En modifiant simplement le taux moyen d'utilisation d'un tel module de quelques pourcentages par rapport aux autres modules, on peut assurer l'équilibrage de la charge des modules sans trop déséquilibrer le stress et l'échauffement des modules du pack batterie. Cet équilibrage s'applique de la même manière pour les cellules, d'un même module ou non ;
- les modules sont choisis en fonction du courant qu'ils peuvent fournir, et sollicités quant ils sont aptes à fournir un courant supérieur ou égal au courant demandé. Dans les phases où le courant demandé est plus faible, on utilise les modules dont la capacité à fournir du courant est plus faible ;
- limitation de l'utilisation des modules et/ou cellules dont la température est la plus élevée ou utilisation de manière préférentielle, lorsque le courant demandé est plus faible. De manière générique, il est évité que la température d'un module et/ou cellule dépasse un seuil ; ce risque de dépassement est anticipé. De manière optimale, la température au sein de la batterie est maintenue relativement homogène pour homogénéiser le vieillissement des cellules et augmenter leur durabilité.

En variante, d'autres stratégies sont imaginables et le procédé de gestion de la batterie peut par exemple comprendre les étapes suivantes :
- utilisation en priorité d'une partie de la batterie pour n'avoir à changer que cette partie de la batterie au premier changement nécessaire. Il est possible d'imaginer qu'une partie de la batterie soit plus facilement interchangeable ;
- utilisation selon un taux plus élevé des cellules optimisées pour résister à une utilisation intensive et limitation de la sollicitation du reste de la batterie, qui peut être optimisé pour apporter plutôt de la capacité énergétique. De manière plus générique, dans le cas d'une batterie hétérogène en technologie de cellule, c'est-à-dire réunissant des cellules de nature différente, il peut être intéressant d'avoir une hétérogénéité dans l'utilisation pour optimiser la performance globale en tenant compte des avantages de chaque cellule.

Finalement, le procédé de diagnostic de la batterie comprend plus généralement une étape de mesure d'au moins une grandeur caractéristique de l'état d'une cellule, comme une tension, un courant, une température, un nombre d'ampères par heure, voire toute autre grandeur significative, puis une étape de décision sur l'état de l'interrupteur de la cellule et/ou module associé en tenant compte de cette mesure. Comme cela a été explicité ci-dessus, cette décision peut amener une action consistant en l'ouverture totale de l'interrupteur de cellule ou la fermeture de l'interrupteur de module associé en cas de défaillance de la cellule, pour la déconnecter du reste de la batterie, ou de manière intermédiaire en une alternance d'ouverture et/ou fermeture selon un rapport cyclique optimal pour maintenir la cellule dans un état acceptable. Ainsi, selon un mode de réalisation, plusieurs seuils peuvent être prédéfinis pour une certaine grandeur mesurée, afin de déterminer des actions différentes selon le seuil atteint. Les actions engagées suite à la mesure d'une grandeur liée à une cellule donnée seront déterminées de sorte de minimiser les opérations d'ouverture et fermeture d'interrupteurs, pour éviter leur commutation trop fréquente consommatrice de puissance, éviter leur commutation intempestive, et maîtriser la synchronisation des commutations d'interrupteur entre les différentes cellules de la batterie.

La mise en oeuvre du procédé de gestion de la batterie décrit ci-dessus peut être mise en oeuvre par un calculateur local et/ou distant, comme cela a été explicité auparavant. Ce calculateur peut comprendre un ou plusieurs microprocesseurs.

En remarque, la mise en oeuvre du procédé localement, sans recours à un calculateur central, présente les avantages suivants :
- comme la ou les mesures et leur analyse sont faites localement et indépendamment des autres modules, la réaction peut être très rapide. Elle est plus rapide que la réalisation avec un calculateur central qui nécessiterait une communication par une liaison avec isolation galvanique, avec d'abord un codage série qui induirait un premier délai, puis le transfert par un bus dont le débit réduit impliquerait un second délai ;
- dans le cas où un module comprend son propre calculateur, un traitement poussé des mesures peut être fait, pour atteindre ainsi un diagnostic précis de chaque cellule, son état de santé et son état de charge.

Toutes ces opérations du procédé de gestion d'une batterie ont été effectuées sur la base d'une analyse par un ou plusieurs microcontrôleur(s). En variante, comme les actions à effectuer sont simples, il est possible d'utiliser tout ou partie d'un circuit électronique asynchrone, sans nécessité d'une horloge haute fréquence pour limiter la consommation énergétique de la solution. Dans une telle variante, la détection d'un seuil se ferait directement sur une mesure analogique via un comparateur et l'action induite suite à un passage de seuil pourrait être exécutée de manière asynchrone via des circuits logiques, utilisant par exemple des bascules, registres.

D'autre part, le principe de fonctionnement précédent s'applique aussi de manière similaire dans une phase de recharge de la batterie, qui permet à la batterie de se recharger directement par sa connexion sur le réseau électrique standard. Plus précisément, lors d'une recharge de la batterie, cette dernière est reliée à une source de tension, et comme les cellules et les transistors représentent une résistance interne, la circulation d'un courant dans la batterie engendre une chute de tension résistive, qui correspond à la différence entre la tension imposée par la source et celle à vide obtenue par les différents modules en série de la batterie. Le fait de pouvoir réguler cette différence permet de gérer le courant de charge de la batterie. Ainsi, la batterie met aussi en oeuvre un procédé de charge, qui comprend une étape d'ouverture et/ou fermeture d'interrupteurs pour obtenir un courant de charge souhaité au niveau de cellules choisies. Une régulation similaire à celle explicitée précédemment peut être mise en oeuvre, permettant de déterminer le nombre de modules à placer en série, et lesquelles, pour obtenir une consigne de courant de recharge au sein de la batterie. De même qu'explicité précédemment, ce procédé comprend une étape de choix des cellules à recharger, tenant compte notamment de leur état de charge et de leur état de santé. En remarque, une inductance peut être placée entre la source et la batterie pour lisser le courant qui circule entre les deux. Cette remarque s'applique de manière similaire entre la batterie et une charge. Ainsi, la batterie permet une recharge sur le réseau électrique de manière simplifiée, sans nécessiter de convertisseur électrique de type tension/courant.

Finalement, la solution décrite précédemment présente de nombreux avantages parmi lesquels :
- elle repose sur une multitude d'interrupteurs élémentaires, c'est-à-dire une multitude de transistors selon le mode de réalisation préféré, éloignés les uns des autres, ce qui permet facilement d'évacuer l'énergie dissipée par leur fonctionnement, puisque cette énergie dissipée se présente sous la forme d'une multitude de petites quantités d'énergie éparpillées dans la structure de la batterie ;
- elle permet d'effectuer un équilibrage en temps réel des cellules de la batterie via un aiguillage dynamique du courant ;
- elle permet d'effectuer un équilibrage en temps réel des modules de la batterie via une optimisation des taux d'utilisation de chacun d'eux ;
- elle permet de déconnecter les cellules défaillantes ;
- elle permet de limiter le courant dans les cellules dont la température devient trop élevée via une déconnexion de la cellule, totalement ou selon un rapport cyclique permettant d'atteindre un courant moyen acceptable par la cellule ;
- elle permet d'ajuster la tension de sortie de la batterie de manière douce (commutation basse fréquence < 1000 Hz et avec des paliers en tension peu élevés, par exemple 4V), sans nécessiter de hachage haute fréquence de la pleine tension de la batterie. Elle permet d'ajuster une tension continue souhaitée pour le pilotage de moteurs à courant continu ou pour la recharge sur une source continue. Elle permet aussi de générer une tension alternative pour le pilotage de moteurs synchrones ou asynchrones, etc., ou pour une recharge directe sur le réseau électrique ;
- elle permet d'isoler individuellement une cellule d'un module, en permettant notamment de mesurer sa tension à vide même si la batterie est en fonctionnement ;
- elle permet d'isoler toutes les cellules, par exemple à l'arrêt du véhicule ou suite à la détection d'une défaillance majeure, permettant d'écarter tous risques électriques pour l'utilisateur ou les personnes qui seront amenées à intervenir, par exemple les pompiers en cas d'incendie.

De plus, les modes de réalisation précédents ont été décrits en implémentant un interrupteur de cellule pour chaque cellule de la batterie. Toutefois, il serait possible d'obtenir une amélioration d'une batterie en ne gérant qu'une partie de ses cellules, et donc en ne disposant des interrupteurs de cellule que sur une partie des cellules de la batterie, donc au moins un interrupteur, avantageusement sur au moins deux cellules d'un même module pour permettre une certaine souplesse dans cette gestion. Certains modules pourraient ne pas implémenter l'approche décrite précédemment et il est possible d'imaginer une batterie associant des modules conventionnels et des modules améliorés. De plus, l'invention couvre toutes les réalisations intermédiaires intégrant un ou plusieurs interrupteur(s) de module et/ou interrupteurs parallèles, pour une partie seulement des modules.

Enfin, les exemples représentés comprennent peu de cellules pour une raison de clarté des figures. Toutefois, les réalisations envisagées sont adaptées pour la mise en oeuvre de batteries aptes à fournir une tension de sortie importante, pouvant atteindre plusieurs centaines de volts, par exemple supérieure ou égale à 250 volts. Elles sont donc adaptées pour des batteries comprenant un nombre important de modules, notamment supérieur ou égal à 8.

Les différents interrupteurs mentionnés, de cellule et/ou module et/ou parallèles, ont été implémentés à l'aide de transistors. Des transistors NMOS ou PMOS ont été principalement représentés, mais il est toutefois possible d'utiliser des transistors bipolaires NPN et PNP, qui présentent l'avantage de pouvoir être commandés avec une tension assez faible, des transistors FET, JFET, IGBT, des transistors en technologie GaN, Si, SiC, des relais, etc. En variante, tout autre type d'interrupteurs que ceux décrits pourrait être implémenté, comme des thyristors si le courant est naturellement amené à s'inverser au moment où on souhaite l'ouvrir.

La batterie de l'invention peut être gérée par une unité intelligente, un calculateur ou circuit de traitement local et/ou distant et accessible par un dispositif de communication local, ce calculateur pouvant comprendre tout élément logiciel (software) et/ou matériel (hardware) pour gérer la batterie, notamment déterminer la configuration de ses interrupteurs. Pour cela, la batterie peut intégrer tout moyen d'actionnement, tout circuit de commande, de ses interrupteurs.

De nombreuses autres variantes de réalisation de l'invention peuvent être facilement imaginées par une simple combinaison des modes de réalisation et/ou leurs variantes décrits précédemment.

En remarque, la communication au sein de la batterie et/ou vers une unité extérieure peut se faire selon un principe de courant porteur, dès lors que le courant demandé par une charge ou fourni par une source n'est pas trop important pour autoriser la déconnection de certaines cellules. En effet, ce principe repose sur une alternance volontaire de connexions et déconnexions de certaines cellules de la batterie, afin de créer une modulation de courant induit et une modulation de puissance au niveau d'un module, qui se propage à l'ensemble de la batterie et au-delà. Cette modulation de puissance est donc visible par les autres modules de la batterie et par une charge extérieure, ce qui permet de l'utiliser pour transmettre des informations selon n'importe quel protocole de communication, existant et normalisé ou non. Il peut par exemple être défini un circuit maître qui interroge tour à tour toutes les cellules, par leur adresse, chaque cellule répondant ensuite dans un créneau temporel dédié. Le maître peut par exemple demander une information comme une mesure de tension, courant et/ou température à une certaine cellule, puis cette dernière peut envoyer l'information demandée avec éventuellement un code permettant d'informer d'une éventuelle défaillance ou non. Ce principe permet ainsi à différentes cellules de la batterie de communiquer simplement entre elles, ou de communiquer vers un calculateur central ou un circuit de traitement de la batterie ou vers une unité extérieure. En remarque, la modulation de courant peut se faire sans déconnecter complètement une cellule, mais simplement en modulant la résistance à l'état passant du transistor de cellule, c'est-à-dire en modulant la tension de grille du transistor autour d'un point de polarisation. Cela évite que la cellule soit complètement déconnectée et surcharge trop les autres cellules de l'étage qui prennent le relais sur la circulation du courant. Cette modulation de résistance à l'état passant peut aussi se faire sur le transistor de module lorsque celui-ci est activé. Cela permet alors de communiquer même si l'étage est désactivé par l'ouverture des transistors de cellule. La communication par courant porteur permet de moduler un courant important au niveau de l'étage sans pour autant engendrer de pertes électriques importantes. En effet, cette modulation de courant se fait en modulant une consommation de courant simplement stocké et déstocké puisqu'appartenant à une batterie, ce qui fait qu'il n'existe pas les pertes qui existent dans un élément dissipatif comme une résistance ou un transistor en mode linéaire utilisé classiquement pour un système de courant porteur.

Finalement, toutes les réalisations d'une batterie illustrées précédemment montrent qu'il est possible d'utiliser différents types d'interrupteurs pour remplir des fonctions différentes et complémentaires parmi lesquels :
- des interrupteurs de cellule, pour connecter ou déconnecter une cellule particulière de la batterie ;
- des interrupteurs parallèles, pour by-passer ou non une cellule particulière de la batterie ;
- des interrupteurs de module, pour by-passer ou non un module de la batterie ;
- des interrupteurs pour by-passer ou non plusieurs modules simultanément de la batterie ;
- des interrupteurs pour inverser ou non la tension en sortie de la batterie ;
- des interrupteurs d'inversion série/parallèle pour disposer en série ou en parallèle certaines sous-parties de la batterie.

Selon une réalisation avantageuse, comme cela a été décrit, tous ces interrupteurs sont pilotés par un circuit de commande alimenté par au moins une cellule de la batterie elle-même, c'est-à-dire alimenté localement, sans recours à une alimentation extérieure. D'autre part, le pilotage d'un interrupteur est de préférence réalisé par un circuit de commande suffisamment proche, alimenté par au moins une cellule du module le plus proche ou à proximité, pour mettre en jeu des tensions d'un même ordre de grandeur entre le circuit de commande et l'interrupteur piloté, par exemple le transistor piloté. Pour cela, il est avantageusement choisi de piloter un interrupteur, dont une des bornes, de source ou drain dans le cas d'un transistor NMOS par exemple, est reliée à une tension d'un certain module par un circuit de commande alimenté par ce même module ou un module adjacent, plus exactement par au moins une cellule de l'un de ces modules. Plus généralement, il pourra être choisi tout circuit de commande dont la liaison d'alimentation se trouve sur un module dont la différence de potentiel avec les bornes de l'interrupteur ne dépasse pas un seuil prédéfini, qui risquerait d'endommager l'interrupteur, de créer une situation de risque électrique. Ce seuil est défini par des normes de sécurité et dépend du type d'interrupteur implémenté. Cette alimentation locale, de proximité, présente le second avantage de permettre l'utilisation de liaisons de pilotage de faible longueur entre le circuit de commande et l'interrupteur.

Ensuite, il faut noter que le circuit de commande doit permettre l'actionnement fiable des différents interrupteurs. Dans un cas où les différents modules présentent une différence de potentiel de 3V et que l'interrupteur est de type NMOS, un circuit de commande intègre de préférence une pompe de charge pour augmenter la tension de 3V présente sur ses bornes d'entrée, et utiliser en sortie une tension plus élevée pour l'actionnement des interrupteurs, en fonction de ces derniers. Dans le cas d'un transistor NMOS par exemple, il sera choisi d'alimenter sa grille par une tension telle que la différence de tension entre sa grille et sa source soit de l'ordre de 20 V, pour garantir un actionnement fiable.

L'invention s'applique à tous les systèmes qui comportent plusieurs cellules ou modules de batteries (de préférence un grand nombre, supérieur à 4). Les applications vont du véhicule électrique aux outils électroportatifs en passant par le vélo électrique, les unités de régulation du réseau électrique... Plus généralement, le même principe s'applique à toutes les applications faisant appel à plusieurs éléments de stockage d'énergie, voire de production d'énergie, tels que des cellules solaires ou des piles à combustible. On peut par exemple utiliser le procédé pour rajouter/retirer/remplacer un panneau solaire dans une installation photovoltaïque. Dans ce cas, tout ou partie des cellules d'une batterie telle que décrite précédemment peut être associée à une source locale d'énergie, par exemple de type capteur solaire, capteur thermique, convertisseur mécanique/électrique, etc., pour profiter de cette source pour son rechargement par exemple, et/ou pour apporter des possibilités supplémentaires pour la fourniture d'énergie par la batterie.

## Revendications

1. Dispositif de stockage et/ou de génération électrique comprenant plusieurs boîtiers (50) de génération électrique disposés en série, **caractérisé en ce qu'**il comprend un bâti (100) avec des emplacements (55) pour loger les boîtiers (50) de manière amovible, un emplacement (55) comprenant des contacts électriques (56, 57) pour la liaison électrique d'un boîtier (50) avec les bornes (66, 67) du dispositif de stockage et/ou de génération électrique, par l'intermédiaire d'un bus de puissance (65), l'emplacement étant associé à un interrupteur de bâti (60), de sorte à pouvoir conserver une génération électrique en l'absence d'un certain boîtier dans un certain emplacement par l'intermédiaire d'au moins un autre boîtier disposé dans un autre emplacement du bâti (100) et **caractérisé en ce qu'**un boîtier (50) comprend au moins un interrupteur interne apte à le configurer avec une tension de sortie nulle et un interrupteur lui permettant d'isoler électriquement ses cellules de ses bornes de sortie et **en ce qu'**un dispositif de détection de présence du boîtier génère automatiquement une commande d'actionnement automatique du au moins un interrupteur interne pour configurer le boîtier avec une tension de sortie nulle dès son retrait d'un emplacement et le reconfigurer en tension de sortie non nulle après son insertion dans un emplacement.

2. Dispositif de stockage et/ou de génération électrique selon la revendication précédente, **caractérisé en ce qu'**il comprend un dispositif de détection de boîtier lié à un dispositif d'actionnement d'un interrupteur de bâti (60) agencé sur le bus de puissance (65) pour permettre sa fermeture automatique sur ce bus de puissance (65) lors du retrait d'un boîtier (50) et son ouverture automatique lors de l'insertion d'un boîtier.

3. Dispositif de stockage et/ou de génération électrique selon l'une des revendications précédentes, **caractérisé en ce qu'**il comprend un dispositif de verrouillage/déverrouillage (58) d'un boîtier dans un emplacement (55) et un dispositif de détection de boîtier lié au dispositif de verrouillage/déverrouillage (58).

4. Dispositif de stockage et/ou de génération électrique selon la revendication 2 ou 3, **caractérisé en ce qu'**il comprend un dispositif d'actionnement d'un interrupteur de bâti (60) selon la définition contenue dans la revendication 2 qui est mécanique ou électronique, et/ou **en ce que** l'interrupteur de bâti (60) est un interrupteur mécanique, un relais ou un interrupteur électronique comme un transistor.

5. Dispositif de stockage et/ou de génération électrique selon la revendication précédente, **caractérisé en ce que** le dispositif d'actionnement et l'interrupteur de bâti (60) sont tels qu'ils permettent un actionnement de l'interrupteur de bâti en une durée inférieure ou égale à 10 ms, et/ou **en ce qu'**il comprend un dispositif limiteur de tension pour éviter une trop forte hausse de tension au niveau d'un interrupteur de bâti (60).

6. Dispositif de stockage et/ou de génération électrique selon l'une des revendications précédentes, **caractérisé en ce que** le bâti (100) comprend un bus de communication (52) et un connecteur au niveau d'un emplacement (55) pour relier un boîtier (50) disposé dans cet emplacement au bus de communication.

7. Dispositif de stockage et/ou de génération électrique selon l'une des revendications précédentes, **caractérisé en ce qu'**il comprend plusieurs emplacements (55) permettant une connexion électrique de boîtiers (50) en parallèle, ces emplacements étant associés à un interrupteur de bâti (60) commun ou à plusieurs interrupteurs de bâti (60) liés entre eux, de sorte qu'un by-pass sur un bus de puissance (65) n'est mis en oeuvre qu'en l'absence de tout boîtier sur l'ensemble des emplacements prévus pour la connexion électrique de boîtiers (50) en parallèle.

8. Dispositif de stockage et/ou de génération électrique selon l'une des revendications précédentes, **caractérisé en ce qu'**il est une batterie comprenant plusieurs boîtiers amovibles comprenant chacun plusieurs cellules.

9. Procédé de gestion d'un dispositif de stockage et/ou de génération électrique selon l'une des revendications précédentes, **caractérisé en ce qu'**il comprend les étapes suivantes :
- détection de la présence d'un boîtier (50) au sein d'un emplacement (55) sur un bâti (100) ;
- actionnement d'un interrupteur de bâti (60) sur un bus de puissance (65) pour fermer une connexion de by-pass sur le chemin de puissance dès le retrait d'un boîtier (50) de l'emplacement et/ou pour ouvrir une connexion de by-pass sur le chemin de puissance dès l'insertion d'un boîtier (50) dans l'emplacement.

10. Procédé de gestion d'un dispositif de stockage et/ou de génération électrique selon la revendication précédente, **caractérisé en ce qu'**il comprend une étape de maintien en position ouverte de l'interrupteur de bâti (60) tant qu'un boîtier parmi plusieurs boîtiers disposés en parallèle sur un même étage reste inséré dans son emplacement et connecté au bus de puissance.

11. Procédé de gestion d'un dispositif de stockage et/ou de génération électrique selon la revendication 9 ou 10, **caractérisé en ce qu'**il comprend les étapes suivantes lors de la détection du retrait d'un boîtier (50) unique sur un étage au sein d'un emplacement du bâti :
- configuration du boîtier (50) avec une tension de sortie nulle, puis
- actionnement d'un interrupteur de bâti (60) pour fermer un bypass sur un bus de puissance (65) du bâti,
et/ou **en ce qu'**il comprend les étapes suivantes lors de la détection de l'insertion d'un boîtier (50) dans un emplacement du bâti :
- actionnement d'un interrupteur de bâti (60) pour ouvrir un by-pass sur un bus de puissance (65) du bâti, puis
- configuration du boîtier avec une tension de sortie non nulle.

12. Procédé de gestion d'un dispositif de stockage et/ou de génération électrique selon l'une des revendications 9 à 11, **caractérisé en ce qu'**il comprend une étape d'actionnement séquentiel des différents interrupteurs pour éviter tout court-circuit lors de la détection du retrait ou de l'insertion d'un boîtier.

13. Procédé de gestion d'un dispositif de stockage et/ou de génération électrique selon l'une des revendications 9 à 12, **caractérisé en ce qu'**il comprend une étape de communication par un bus de communication (52) disposé au sein du bâti (100) entre un circuit de commande (27 ; 127) du boîtier et une intelligence du dispositif de génération électrique extérieure au boîtier (50) pour déterminer l'actionnement ou non d'au moins un interrupteur disposé au sein du boîtier.

14. Procédé de gestion d'un dispositif de stockage et/ou de génération électrique selon l'une des revendications 9 à 13, **caractérisé en ce qu'**il comprend une étape d'équilibrage de la tension ou de l'état de charge de boîtiers (50) connectés en parallèle dans des emplacements au sein du bâti (100).

15. Procédé de gestion d'un dispositif de stockage et/ou de génération électrique selon la revendication précédente, **caractérisé en ce que** l'étape d'équilibrage comprend une étape de connexion/déconnexion d'au moins un des boîtiers disposés en parallèle selon un rapport cyclique lié au déséquilibre.

16. Procédé de gestion d'un dispositif de stockage et/ou de génération électrique selon l'une des revendications 9 à 15, **caractérisé en ce qu'**il comprend une étape d'ouverture/fermeture cyclique d'au moins un interrupteur interne d'un boîtier ou d'au moins un interrupteur de bâti selon un rapport cyclique augmentant ou diminuant lors de respectivement l'insertion ou le retrait dudit boîtier pour limiter la vitesse de variation de la tension en sortie de la batterie.

17. Procédé de gestion d'un dispositif de stockage et/ou de génération électrique selon l'une des revendications 9 à 16, **caractérisé en ce que** le dispositif de génération électrique est une batterie et en qu'il comprend une étape d'alimentation électrique d'un circuit de commande (27 ; 127) d'un interrupteur disposé au niveau d'un module donné du boîtier à partir d'au moins une cellule (11 ; 111) du module donné ou d'un module voisin.

## Patentansprüche

1. Vorrichtung zur Stromspeicherung und/oder Stromerzeugung, die mehrere in Reihe angeordnete Stromerzeugungsgehäuse (50) enthält, **dadurch gekennzeichnet, dass** sie ein Gestell (100) mit Einbaustellen (55) zur lösbaren Aufnahme der Gehäuse (50) enthält, wobei eine Einbaustelle (55) elektrische Kontakte (56, 57) zur elektrischen Verbindung eines Gehäuses (50) mit den Klemmen (66, 67) der Vorrichtung zur Stromspeicherung und/oder Stromerzeugung über einen Leistungsbus (65) enthält, wobei die Einbaustelle einem Gestellschalter (60) zugeordnet ist, um eine Stromerzeugung in Abwesenheit eines bestimmten Gehäuses in einer bestimmten Einbaustelle mittels mindestens eines anderen Gehäuses aufrechterhalten zu können, das in einer anderen Einbaustelle des Gestells (100) angeordnet ist, und **dadurch gekennzeichnet, dass** ein Gehäuse (50) mindestens einen inneren Schalter, der fähig ist, es mit einer Ausgangsspannung Null zu konfigurieren, und einen Schalter enthält, der es ihm erlaubt, seine Zellen von seinen Ausgangsklemmen elektrisch zu isolieren, und dass eine Vorrichtung zur Erfassung des Vorhandenseins des Gehäuses automatisch eine automatische Betätigungssteuerung des mindestens einen inneren Schalters erzeugt, um das Gehäuse ab seiner Entnahme aus einer Einbaustelle mit einer Ausgangsspannung Null zu konfigurieren und es nach seiner Einfügung in eine Einbaustelle mit einer Ausgangsspannung ungleich Null zu rekonfigurieren.

2. Vorrichtung zur Stromspeicherung und/oder Stromerzeugung nach dem vorhergehenden Anspruch, **dadurch gekennzeichnet, dass** sie eine Gehäuseerfassungsvorrichtung enthält, die mit einer Betätigungsvorrichtung eines auf dem Leistungsbus (65) angeordneten Gestellschalters (60) verbunden ist, um sein automatisches Schließen auf diesen Leistungsbus (65) bei der Entnahme eines Gehäuses (50) und sein automatisches Öffnen beim Einfügen eines Gehäuses zu erlauben.

3. Vorrichtung zur Stromspeicherung und/oder Stromerzeugung nach einem der vorhergehenden Ansprüche, **dadurch gekennzeichnet, dass** sie eine Vorrichtung zur Verriegelung/Entriegelung (58) eines Gehäuses in einer Einbaustelle (55) und eine mit der Vorrichtung zur Verriegelung/Entriegelung (58) verbundene Gehäuseerfassungsvorrichtung enthält.

4. Vorrichtung zur Stromspeicherung und/oder Stromerzeugung nach Anspruch 2 oder 3, **dadurch gekennzeichnet, dass** sie eine Betätigungsvorrichtung eines Gestellschalters (60) gemäß der in Anspruch 2 enthaltenen Definition enthält, die mechanisch oder elektronisch ist, und/oder dass der Gestellschalter (60) ein mechanischer Schalter, ein Relais oder ein elektronischer Schalter wie ein Transistor ist.

5. Vorrichtung zur Stromspeicherung und/oder Stromerzeugung nach dem vorhergehenden Anspruch, **dadurch gekennzeichnet, dass** die Betätigungsvorrichtung und der Gestellschalter (60) so sind, dass sie eine Betätigung des Gestellschalters über eine Dauer von weniger als oder gleich 10 ms erlauben, und/oder dass sie eine Spannungsbegrenzervorrichtung enthält, um ein zu starkes Ansteigen der Spannung im Bereich eines Gestellschalters (60) zu vermeiden.

6. Vorrichtung zur Stromspeicherung und/oder Stromerzeugung nach einem der vorhergehenden Ansprüche, **dadurch gekennzeichnet, dass** das Gestell (100) einen Kommunikationsbus (52) und einen Verbinder im Bereich einer Einbaustelle (55) enthält, um ein in dieser Einbaustelle angeordnetes Gehäuse (50) mit dem Kommunikationsbus zu verbinden.

7. Vorrichtung zur Stromspeicherung und/oder Stromerzeugung nach einem der vorhergehenden Ansprüche, **dadurch gekennzeichnet, dass** es mehrere Einbaustellen (55) enthält, die eine elektrische Parallelschaltung von Gehäusen (50) erlaubt, wobei diese Einbaustellen einem gemeinsamen Gestellschalter (60) oder mehreren miteinander verbundenen Gestellschaltern (60) zugeordnet sind, so dass ein Bypass auf einen Leistungsbus (65) nur in Abwesenheit jeglichen Gehäuses in der Gesamtheit der Einbaustellen angewendet wird, die für die elektrische Parallelschaltung von Gehäusen (50) vorgesehen sind.

8. Vorrichtung zur Stromspeicherung und/oder Stromerzeugung nach einem der vorhergehenden Ansprüche, **dadurch gekennzeichnet, dass** sie eine Batterie ist, die mehrere entfernbare Gehäuse enthält, die je mehrere Zellen enthalten.

9. Verfahren zur Verwaltung einer Vorrichtung zur Stromspeicherung und/oder Stromerzeugung nach einem der vorhergehenden Ansprüche, **dadurch gekennzeichnet, dass** es die folgenden Schritte enthält:
- Erfassung des Vorhandenseins eines Gehäuses (50) innerhalb einer Einbaustelle (55) auf einem Gestell (100);
- Betätigung eines Gestellschalters (60) auf einem Leistungsbus (65), um eine Bypass-Verbindung auf dem Leistungspfad beim Entfernen eines Gehäuses (50) von der Einbaustelle zu schließen und/oder um eine Bypass-Verbindung auf dem Leistungspfad beim Einfügen eines Gehäuses (50) in die Einbaustelle zu öffnen.

10. Verfahren zur Verwaltung einer Vorrichtung zur Stromspeicherung und/oder Stromerzeugung nach dem vorhergehenden Anspruch, **dadurch gekennzeichnet, dass** es einen Schritt des Haltens des Gestellschalters (60) in offener Stellung enthält, so lange ein Gehäuse von mehreren auf der gleichen Stufe parallel angeordneten Gehäusen in seine Einbaustelle eingefügt und mit dem Leistungsbus verbunden bleibt.

11. Verfahren zur Verwaltung einer Vorrichtung zur Stromspeicherung und/oder Stromerzeugung nach Anspruch 9 oder 10, **dadurch gekennzeichnet, dass** es die folgenden Schritte bei der Erfassung der Entnahme eines einzigen Gehäuses (50) auf einer Stufe innerhalb einer Einbaustelle des Gestells enthält:
- Konfiguration des Gehäuses (50) mit einer Ausgangsspannung Null, dann
- Betätigung eines Gestellschalters (60), um einen Bypass auf einem Leistungsbus (65) des Gestells zu schließen,
und/oder dass es die folgenden Schritte bei der Erfassung der Einfügung eines Gehäuses (50) in eine Einbaustelle des Gestells enthält:
- Betätigung eines Gestellschalters (60), um einen Bypass auf einem Leistungsbus (65) des Gestells zu öffnen, dann
- Konfiguration des Gehäuses mit einer Ausgangsspannung ungleich Null.

12. Verfahren zur Verwaltung einer Vorrichtung zur Stromspeicherung und/oder Stromerzeugung nach einem der Ansprüche 9 bis 11, **dadurch gekennzeichnet, dass** es einen Schritt der sequentiellen Betätigung der verschiedenen Schalter enthält, um jeden Kurzschluss bei der Erfassung der Entnahme oder der Einfügung eines Gehäuses zu vermeiden.

13. Verfahren zur Verwaltung einer Vorrichtung zur Stromspeicherung und/oder Stromerzeugung nach einem der Ansprüche 9 bis 12, **dadurch gekennzeichnet, dass** es einen Schritt der Kommunikation durch einen Kommunikationsbus (52), der innerhalb des Gestells (100) angeordnet ist, zwischen einer Steuerschaltung (27; 127) des Gehäuses und einer Intelligenz der Stromerzeugungsvorrichtung außerhalb des Gehäuses (50) enthält, um die Betätigung oder Nichtbetätigung mindestens eines Schalters zu bestimmen, der innerhalb des Gehäuses angeordnet ist.

14. Verfahren zur Verwaltung einer Vorrichtung zur Stromspeicherung und/oder Stromerzeugung nach einem der Ansprüche 9 bis 13, **dadurch gekennzeichnet, dass** es einen Schritt des Abgleichs der Spannung oder des Ladezustands von Gehäusen (50) enthält, die in Einbaustellen innerhalb des Gestells (100) parallelgeschaltet sind.

15. Verfahren zur Verwaltung einer Vorrichtung zur Stromspeicherung und/oder Stromerzeugung nach dem vorhergehenden Anspruch, **dadurch gekennzeichnet, dass** der Abgleichschritt einen Schritt des Verbindens/Trennens mindestens eines der parallel angeordneten Gehäuse gemäß einem mit der Unsymmetrie verbundenen zyklischen Verhältnis enthält.

16. Verfahren zur Verwaltung einer Vorrichtung zur Stromspeicherung und/oder Stromerzeugung nach einem der Ansprüche 9 bis 15, **dadurch gekennzeichnet, dass** es einen Schritt des zyklischen Öffnens/Schließens mindestens eines inneren Schalters eines Gehäuses oder mindestens eines Gestellschalters gemäß einem zyklischen Verhältnis enthält, das beim Einfügen bzw. Entnehmen des Gehäuses zunimmt oder abnimmt, um die Änderungsgeschwindigkeit der Spannung am Ausgang der Batterie zu begrenzen.

17. Verfahren zur Verwaltung einer Vorrichtung zur Stromspeicherung und/oder Stromerzeugung nach einem der Ansprüche 9 bis 16, **dadurch gekennzeichnet, dass** die Stromerzeugungsvorrichtung eine Batterie ist, und dass es einen Schritt der Stromversorgung einer Steuerschaltung (27; 127) eines Schalters, der im Bereich eines gegebenen Moduls des Gehäuses angeordnet ist, ausgehend von mindestens einer Zelle (11; 111) des gegebenen Moduls oder eines benachbarten Moduls enthält.

## Claims

1. Electrical storage and/or generation device comprising multiple electrical generation boxes (50) positioned in series, **characterized in that** it comprises an assembly (100) with sites (55) for removably accommodating the boxes (50), a site (55) comprising electrical contacts (56, 57) for electrically linking a box (50) with the terminals (66, 67) of the electrical storage and/or generation device, via a power bus (65), the site being associated with an assembly switch (60), so as to be able to continue generating electricity in the absence of a certain box in a certain site via at least one other box positioned in another site of the assembly (100) and **characterized in that** a box (50) comprises at least one internal switch that is capable of configuring it with a zero output voltage and a switch that allows it to electrically isolate its cells from its output terminals and **in that** a device for detecting the presence of the box automatically generates a command for automatically actuating the at least one internal switch so as to configure the box with a zero output voltage as soon as it is removed from a site and to reconfigure it to have a non-zero output voltage after it is inserted into a site.

2. Electrical storage and/or generation device according to the preceding claim, **characterized in that** it comprises a device for detecting a box linked to a device for actuating an assembly switch (60) arranged on the power bus (65) so as to allow it to be automatically closed on this power bus (65) when a box (50) is removed and automatically opened when a box is inserted.

3. Electrical storage and/or generation device according to either of the preceding claims, **characterized in that** it comprises a device (58) for locking/unlocking a box into/from a site (55) and a device for detecting a box linked to the locking/unlocking device (58).

4. Electrical storage and/or generation device according to Claim 2 or 3, **characterized in that** it comprises a device for actuating an assembly switch (60) according to the definition contained in Claim 2, which is mechanical or electronic, and/or **in that** the assembly switch (60) is a mechanical switch, a relay or an electronic switch such as a transistor.

5. Electrical storage and/or generation device according to the preceding claim, **characterized in that** the actuator device and the assembly switch (60) are such that they allow the assembly switch to be actuated for a duration that is shorter than or equal to 10 ms, and/or **in that** it comprises a voltage limiting device for preventing an overly high increase in voltage at an assembly switch (60).

6. Electrical storage and/or generation device according to one of the preceding claims, **characterized in that** the assembly (100) comprises a communication bus (52) and a connector at a site (55) for the purpose of linking a box (50) positioned in this site to the communication bus.

7. Electrical storage and/or generation device according to one of the preceding claims, **characterized in that** it comprises multiple sites (55) allowing boxes (50) to be electrically connected in parallel, these sites being associated with a common assembly switch (60) or with multiple assembly switches (60) linked to one another, such that a power bus (65) is bypassed only in the absence of a box on any of the sites provided for electrically connecting boxes (50) in parallel.

8. Electrical storage and/or generation device according to one of the preceding claims, **characterized in that** it is a battery comprising multiple removable boxes each comprising multiple cells.

9. Method for managing an electrical storage and/or generation device according to one of the preceding claims, **characterized in that** it comprises the following steps:
- detecting the presence of a box (50) within a site (55) on an assembly (100);
- actuating an assembly switch (60) on a power bus (65) in order to close a bypass connection on the power path at the moment of removal of a box (50) from the site and/or in order to open a bypass connection on the power path at the moment of insertion of a box (50) into the site.

10. Method for managing an electrical storage and/or generation device according to the preceding claim, **characterized in that** it comprises a step of keeping the assembly switch (60) open as long as one box out of multiple boxes positioned in parallel on one and the same stage remains inserted in its site and connected to the power bus.

11. Method for managing an electrical storage and/or generation device according to Claim 9 or 10, **characterized in that** it comprises the following steps when the removal of a single box (50) on a stage within a site of the assembly is detected:
- configuring the box (50) with a zero output voltage, then
- actuating an assembly switch (60) in order to close a bypass on a power bus (65) of the assembly,
and/or **in that** it comprises the following steps when the insertion of a box (50) into a site of the assembly is detected:
- actuating an assembly switch (60) in order to open a bypass on a power bus (65) of the assembly, then
- configuring the box with a non-zero output voltage.

12. Method for managing an electrical storage and/or generation device according to one of Claims 9 to 11, **characterized in that** it comprises a step of sequentially actuating the various switches in order to avoid any short circuit when detecting the removal or the insertion of a box.

13. Method for managing an electrical storage and/or generation device according to one of Claims 9 to 12, **characterized in that** it comprises a step of communication via a communication bus (52) positioned within the assembly (100) between a control circuit (27; 127) of the box and an intelligence of the electrical generation device outside the box (50) for determining whether or not to actuate at least one switch positioned within the box.

14. Method for managing an electrical storage and/or generation device according to one of Claims 9 to 13, **characterized in that** it comprises a step of balancing the voltage or the state of charge of boxes (50) that are connected in parallel in sites within the assembly (100) .

15. Method for managing an electrical storage and/or generation device according to the preceding claim, **characterized in that** the balancing step comprises a step of connecting/disconnecting at least one of the boxes that are positioned in parallel according to a duty cycle linked to the imbalance.

16. Method for managing an electrical storage and/or generation device according to one of Claims 9 to 15, **characterized in that** it comprises a step of cyclically opening/closing at least one internal switch of a box or at least one assembly switch according to a duty cycle that increases or decreases when said box is inserted or removed, respectively, in order to limit the speed of variation of the output voltage of the battery.

17. Method for managing an electrical storage and/or generation device according to one of Claims 9 to 16, **characterized in that** the electrical generation device is a battery and **in that** it comprises a step of supplying electrical power to a control circuit (27; 127) of a switch positioned at a given module of the box from at least one cell (11; 111) of the given module or of a neighbouring module.
